(19) Europäisches Patentamt
European Patent Office
Office européen des brevets

(11) **EP 4 621 741 A1**

(12) **EUROPEAN PATENT APPLICATION**
published in accordance with Art. 153(4) EPC

(43) Date of publication:
**24.09.2025 Bulletin 2025/39**

(21) Application number: **23902516.6**

(22) Date of filing: **30.11.2023**

(51) International Patent Classification (IPC):
*G06V 40/20* (2022.01)     *A63F 13/00* (2014.01)

(52) Cooperative Patent Classification (CPC):
**A63F 13/00; G06F 3/04817; G06T 13/00;
G06V 40/20**

(86) International application number:
**PCT/CN2023/135718**

(87) International publication number:
**WO 2024/125319 (20.06.2024 Gazette 2024/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **15.12.2022 CN 202211620536**

(71) Applicant: **Huawei Technologies Co., Ltd.
Shenzhen, Guangdong 518129 (CN)**

(72) Inventors:
• **MA, Chunhui
Shenzhen, Guangdong 518129 (CN)**
• **CHEN, Xiaohan
Shenzhen, Guangdong 518129 (CN)**
• **HUANG, Lei
Shenzhen, Guangdong 518129 (CN)**
• **ZHAO, Jie
Shenzhen, Guangdong 518129 (CN)**

(74) Representative: **Gill Jennings & Every LLP
The Broadgate Tower
20 Primrose Street
London EC2A 2ES (GB)**

(54) **VIRTUAL CHARACTER DISPLAY METHODS AND ELECTRONIC DEVICE**

(57)     This application provides a virtual figure display method and an electronic device. In the method, a camera may continuously capture images, recognizes a body feature of a figure in the image, and display a virtual figure based on the recognized body feature of the figure. The body feature includes a length and a width of a body part. The electronic device may adjust a length and a width of a body part of the displayed virtual figure based on a length change of the body part of the figure in the captured images, or may display a virtual figure of a fixed size. Technical solutions of this application can help a user observe an action of the user more clearly, and can easily focus on a posture of the user. In addition, the virtual figure can reflect the real posture of the user. The foregoing two display manners can further avoid deformity of the virtual figure.

S901: An electronic device runs a first application

S902: The electronic device receives a first operation

S903: The electronic device starts a camera, and captures an image by using the camera

S904: The electronic device obtains a first image captured by the camera

S905: The electronic device recognizes a first body feature of a figure in the captured first image

S906: The electronic device displays a first virtual figure based on the recognized first body feature

S907: The electronic device captures a second image, and obtains a second body feature

S908: The electronic device displays a second virtual figure based on the second body feature

FIG. 9

## Description

This application claims priority to Chinese Patent Application No. 202211620536.4, filed with the China National Intellectual Property Administration on December 15, 2022 and entitled "VIRTUAL FIGURE DISPLAY METHOD AND ELECTRONIC DEVICE", which is incorporated herein by reference in its entirety.

## TECHNICAL FIELD

This application relates to the field of computer application technologies, and in particular, to a virtual figure display method and an electronic device.

## BACKGROUND

With the development of the current society, more people choose home entertainment activities such as home fitness and home games. When a user performs an entertainment activity by using an electronic device, the electronic device may collect overall figure information of the user by using a camera, and a display of the electronic device may display a real image of the user. However, the real image may be inconsistent with a style of an application used by the user, resulting in a sense of separation, poor immersion of the user, and poor experience.

## SUMMARY

This application provides a virtual figure display method and an electronic device, so that a user can observe an action of the user more clearly, and can easily focus on a posture of the user. In addition, a virtual figure can reflect the real posture of the user, and deformity of the virtual figure can be further avoided.

According to a first aspect, this application provides a virtual figure display method. The method may be applied to an electronic device. In the method, when a user is at a distance of a first value from the electronic device, a first image is captured by using a camera, and a first virtual figure is displayed. When the user is at a distance of a second value from the electronic device, a second image is captured by using the camera, and a second virtual figure is displayed. The second value is less than the first value, a length of a body part of the second virtual figure is greater than a length of a body part of the first virtual figure, and a width of the body part of the second virtual figure is greater than a width of the body part of the first virtual figure.

It can be learned from the foregoing method that a closer distance between the user and the electronic device indicates a larger size of a virtual figure obtained by the electronic device. In other words, a longer length of a body part of the virtual figure indicates a wider width of the body part. In this way, the electronic device may adjust the length and the width of the body part of the virtual figure based on a size of a figure in a shot image. The size of the virtual figure may reflect a distance between the user and the camera in a real environment, and the size of the virtual figure may be reflected by lengths and widths of body parts. In this way, the user can sense a location change and a posture change of the user by observing the virtual figure, and the virtual figure observed by the user does not deform.

With reference to the first aspect, in some implementations, a length of the body part of the first virtual figure and a length of a body part of a figure in the first image are in proportion. A length of the body part of the second virtual figure and a length of a body part of a figure in the second image are in proportion. A posture of the first virtual figure is the same as a posture of the figure in the first image, and a posture of the second virtual figure is the same as a posture of the figure in the second image.

In this way, the electronic device may obtain the first virtual figure based on a body proportion of the figure in the image captured by the camera, and the first virtual figure may truly reflect a body proportion of the user and a real posture of the user.

With reference to the first aspect, in some implementations, the electronic device displays a first user interface. The first user interface includes a first region, and the first region is used to display the first virtual figure and the second virtual figure. When an area of the first region is a first area, the length of the body part of the first virtual figure and the length of the body part of the figure in the first image are in a first proportion, and the length of the body part of the second virtual figure and the length of the body part of the figure in the second image are in the first proportion. When the area of the first region is a second area, the length of the body part of the first virtual figure and the length of the body part of the figure in the first image are in a second proportion, and the length of the body part of the second virtual figure and the length of the body part of the figure in the second image are in the second proportion. The first area is less than the second area, and the first proportion is less than the second proportion.

In this way, the first virtual figure and the second virtual figure may be displayed in the region for displaying the virtual figure, and sizes of the first virtual figure and the second virtual figure may be adjusted based on a size of the region for displaying the virtual figure. A larger region for displaying the virtual figure indicates larger sizes of the first virtual figure and the second virtual figure, and a space size of a display is fully utilized. In addition, the user can more clearly observe the posture and an action of the user.

According to a second aspect, this application provides a virtual figure display method. The method may be applied to an electronic device. In the method, when a user is at a distance of a first value from the electronic device, a first image is captured by using a camera, and a first virtual figure is displayed. When the user is at a distance of a second value from the electronic device, a second image is captured by using the camera, and a second virtual figure is displayed. The second value is less than the first value, and widths of body parts and sizes of the first virtual figure and the second virtual figure are the same.

It can be learned from the foregoing method that, when the user performs workout when facing the electronic device, the electronic device may display a virtual figure of a same size, and the user may observe the virtual figure of the appropriate size, so that the user can more clearly observe an action of the user during the workout. In addition, a phenomenon that a part (for example, a hand) that exceeds a display range and cannot be displayed when the virtual figure is zoomed in or zoomed out is avoided.

With reference to the second aspect, in some implementations, a length of the body part of the first virtual figure and a length of a body part of a figure in the first image are in proportion. A length of the body part of the second virtual figure and a length of a body part of a figure in the second image are in proportion. A posture of the first virtual figure is the same as a posture of the figure in the first image, and a posture of the second virtual figure is the same as a posture of the figure in the second image.

In this way, the electronic device may obtain the first virtual figure based on a body proportion of the figure in the image captured by the camera, and the first virtual figure may truly reflect a body proportion of the user and a real posture of the user.

With reference to the second aspect, in some implementations, the sizes of both the first virtual figure and the second virtual figure are a preset first size. In this way, the electronic device may display a virtual figure of a fixed size, and the fixed size may be determined by the electronic device.

With reference to the second aspect, in some implementations, the electronic device displays a first user interface. The first user interface includes a first region, and the first region is used to display the first virtual figure and the second virtual figure. A foot part of the first virtual figure is located at a first location in the first region, and a foot part of the second virtual figure is located at a second location in the first region. A distance between the first location and a bottom of the first region is the same as a distance between the second location and the bottom of the first region.

In this way, a distance between a bottom of the displayed first virtual figure and a bottom of a display range is consistent with a distance between a bottom of the displayed second virtual figure and the bottom of the display range, so that blurred vision can be avoided when the user observes, and the user can observe more clearly.

With reference to the first aspect and the second aspect, in some implementations, the first image is a first frame of image that is captured after the camera is started and that includes a figure. The width of the body part of the first virtual figure and a width of the body part of the figure in the first image are in proportion, or the width of the body part of the first virtual figure is obtained based on the length of the body part of the figure in the first image and a preset human body proportion. The width of the body part of the second virtual figure is obtained based on the width of the body part of the first virtual figure and a ratio of the length of the body part of the figure in the second image to the length of the body part of the figure in the first image.

In this way, a proportion of the length to the width of the body part of the second image may be consistent with a proportion of the length to the width of the body part of the first image. In this way, the virtual figure observed by the user does not deform.

With reference to the first aspect and the second aspect, in some implementations, before the first virtual figure is displayed, the method may further include: recognizing skeletal nodes of the figure in the first image, and determining the posture of the figure and the length of the body part of the figure in the first image based on the recognized skeletal nodes. Before the second virtual figure is displayed, the method may further include: recognizing skeletal nodes of the figure in the second image, and determining the posture of the figure and the length of the body part of the figure in the second image based on the recognized skeletal nodes.

In this way, the posture of the figure and the length of the body part of the figure in the image are obtained by recognizing the skeletal nodes of the figure in the image. In this way, the body proportion, the posture, and the action of the figure can be more accurately learned.

With reference to the first aspect and the second aspect, in some implementations, the first image is a first frame that is captured after the camera is started and that includes a complete figure. In this way, initial measurement of the length of the body part is accurate, so that the length of the body part of the second virtual figure can be subsequently calculated.

With reference to the first aspect and the second aspect, in some implementations, before the first image is captured, the method further includes: displaying first prompt information. The first prompt information is used to prompt the user to change a location, to enable the camera to capture an image including the complete figure.

With reference to the first aspect and the second aspect, in some implementations, the method further includes: displaying second prompt information. The second prompt information is used to prompt the user to adjust to a standard posture, and the standard posture is a posture in which body parts of the user do not block each other.

In this way, the electronic device may prompt the user to be in an appropriate standard location, and then start to capture the image. In this way, information like the length of the body part obtained through collection is more standard, and a subsequent change rate can be calculated more accurately.

With reference to the first aspect and the second aspect, the second image includes only a first partial body of the figure, and the second virtual figure includes the first partial body and a second partial body. In this way, the electronic device may supplement the virtual figure corresponding to the incomplete figure in the image, and the user may observe a complete virtual figure.

With reference to the first aspect and the second aspect, in some implementations, the second partial body is obtained by the electronic device according to a principle of left-right symmetry of a figure; or is obtained by the electronic device by vertically extending the first partial body; or is obtained by the electronic device based on a figure in an image captured before the second image.

In this way, the electronic device may supplement a virtual figure at a current moment through left-right symmetry and vertical extension, and based on a figure in a previous image.

With reference to the first aspect and the second aspect, in some implementations, the method further includes: The electronic device displays the first user interface. The first user interface includes the first region, and the first region is used to display the first virtual figure and the second virtual figure. The first user interface further displays a follow-along video.

In this way, the electronic device may further supplement the virtual figure based on a figure in the follow-along video.

With reference to the first aspect and the second aspect, in some implementations, before the first image is captured, the method further includes: running a first application. The first application is a sports application or a game application. The electronic device receives a first operation. The first operation is used to start the camera. In some implementations, starting the first application may immediately start the camera, or after starting the first application, the user needs to enable the camera again.

With reference to the first aspect and the second aspect, in some implementations, any one or more of the following attributes of the first virtual figure are the same as attributes of the figure in the first image: a hairstyle, an accessory, clothing, a facial expression, or skin smoothness. In this way, the electronic device can truly restore an image and the posture of the user.

With reference to the first aspect and the second aspect, in some implementations, any one or more of the following attributes of the first virtual figure and the second virtual figure are preset by the electronic device or set by the user: hairstyles, accessories, clothing, facial expressions, or skin smoothness. In this way, the electronic device may set the foregoing attributes based on the real image and the posture of the user, or may preset a plurality of attributes in advance for the user to select.

With reference to the first aspect and the second aspect, in some implementations, the any one or more of the following attributes of the first virtual figure and the second virtual figure are provided by the first application in the electronic device: the hairstyles, the accessories, the clothing, the facial expressions, or the skin smoothness. In this way, the first application may set the foregoing attributes in a plurality of cases for the user to select. In this way, a style of a presented virtual figure may match a style of the first application.

With reference to the first aspect and the second aspect, in some implementations, the method further includes: The electronic device displays the first user interface. The first user interface is used to display the first virtual figure and the second virtual figure, and content displayed on the first user interface does not include the first image and the second image. In this way, the virtual figure displayed by the electronic device is not obtained by cutting the figure from the image, but is generated again based on the skeletal nodes.

According to a third aspect, this application provides an electronic device. The electronic device includes one or more processors and a memory. The memory is coupled to the one or more processors, the memory is configured to store computer program code, the computer program code includes computer instructions, and the one or more processors invoke the computer instructions, to enable the electronic device to perform the method according to any one of the first aspect and the second aspect or the implementations of the first aspect and the second aspect.

According to a fourth aspect, this application provides a computer storage medium, including computer instructions. When the computer instructions are run on a server, a communication apparatus is enabled to perform the device upgrade method in any one of the possible implementations of the foregoing aspects. When the computer instructions are run on an electronic device, the communication apparatus is enabled to perform the device upgrade method in any one of the possible implementations of the foregoing aspects.

It may be understood that both the electronic device provided in the third aspect and the computer-readable storage medium provided in the fourth aspect are configured to perform the method provided in embodiments of this application. Therefore, for beneficial effect that can be achieved by the electronic device and the computer-readable storage medium, refer to the beneficial effect in the corresponding methods. Details are not described herein again.

**BRIEF DESCRIPTION OF DRAWINGS**

FIG. 1 is a diagram of a human body skeletal model according to an embodiment of this application;
FIG. 2 is a diagram of a virtual figure displayed on an electronic device according to an embodiment of this application;

FIG. 3A to FIG. 3D show user interfaces on which an electronic device displays a virtual figure according to an embodiment of this application;

FIG. 4A to FIG. 4C are diagrams of relative locations between a user and an electronic device according to an embodiment of this application;

FIG. 5A to FIG. 5C show user interfaces on which an electronic device displays a virtual figure according to an embodiment of this application;

FIG. 6A to FIG. 6C show user interfaces on which an electronic device displays a virtual figure according to an embodiment of this application;

FIG. 7A to FIG. 7C show user interfaces on which an electronic device displays a virtual figure according to an embodiment of this application;

FIG. 8A to FIG. 8C show user interfaces on which an electronic device displays a virtual figure according to an embodiment of this application;

FIG. 9 is a schematic flowchart of a virtual figure display method according to an embodiment of this application;

FIG. 10A and FIG. 10B are diagrams of skeletal node information obtained by an electronic device according to an embodiment of this application;

FIG. 11A and FIG. 11B are diagrams of skeletal node information obtained by an electronic device according to an embodiment of this application;

FIG. 12 is a diagram of an architecture of an electronic device according to an embodiment of this application; and

FIG. 13 is a diagram of a software architecture of an electronic device according to an embodiment of this application.

**DESCRIPTION OF EMBODIMENTS**

The technical solutions according to embodiments of this application are clearly and completely described in the following with reference to the accompanying drawings. In the descriptions of embodiments of this application, unless otherwise specified, "/" indicates "or". For example, A/B may indicate A or B. The term "and/or" in this specification merely describes an association relationship between associated objects, and indicates that three relationships may exist. For example, A and/or B may indicate the following three cases: Only A exists, both A and B exist, and only B exists. In addition, in the descriptions of embodiments of this application, "a plurality of" means two or more.

In the following description, the terms "first" and "second" are merely intended for a purpose of description, and shall not be understood as indicating or implying relative importance or implying a quantity of indicated technical features. Therefore, a feature limited by "first" and "second" may explicitly or implicitly include one or more features. In the descriptions of embodiments of this application, unless otherwise specified, "a plurality of" means two or more.

A term "user interface (user interface, UI)" in the following embodiments of this application is a medium interface for interaction and information exchange between an application or an operating system and a user, and implements conversion between an internal form of information and a form that can be accepted by the user. The user interface is source code written in a specific computer language like Java or an extensible markup language (extensible markup language, XML). Interface source code is parsed and rendered on an electronic device, and is finally presented as content that can be identified by the user. A frequently-used representation form of the user interface is a graphical user interface (graphic user interface, GUI), and is a user interface that is displayed in a graphical manner and that is related to a computer operation. The user interface may be a visual interface element like a text, an icon, a button, a menu, a tab, a text box, a dialog box, a status bar, a navigation bar, or a Widget that is displayed on a display of the electronic device.

With continuous enhancement of a development capability for an electronic device, when a user uses an application (Application, APP) in the electronic device, a display of the electronic device may display a real-time video image of the user. In this way, when the user uses a sports app (for example, a fitness app or a dance app), the user can observe limb movement of the user at any time. However, in addition to a user figure, an image captured by the electronic device by using a camera further includes an environment (for example, a table or a background wall) around the user, and the ambient environment displayed in the image causes interference to the user. As a result, the user may not easily clearly observe an action of the user, and the user may fail to focus on a posture of the user. This affects user experience.

Embodiments of this application provide a virtual figure display method. In the method, an electronic device continuously captures images by using a camera, recognizes a body feature of a figure in the image, and display a virtual figure based on the recognized body feature of the figure.

In some implementations, the body feature of the figure in the image may include any one or more of the following: a posture of the figure in the image, lengths of body parts (for example, lengths of arms and legs) and widths of body parts (for example, thickness of arms or a waist limb), skin smoothness, a skin color, wearing and a facial expression of the user, and the like.

In this way, in comparison with displaying a real video image of the user, when the virtual figure is displayed, the ambient environment or an object other than the virtual figure corresponding to the user is not displayed. In this way, the user can observe an action of the user more clearly, and can easily focus on a posture of the user. In this way, the user may further feel that the user is in an app, the user has a strong sense of interaction with the app, and user experience is good.

Further, relative distances between the user and the camera of the electronic device are different, or when the user is in different postures, the body feature of the figure in the image shot by the camera may change. For example, when the user is far away from the electronic device, the lengths of the body parts in the body feature become shorter, and when the user moves towards the electronic device, the lengths of the body parts in the body feature become longer.

According to the method provided in embodiments of this application, the electronic device may capture the images in real time, recognize a body feature of a figure in each image, and display a virtual figure based on the body feature in each image. This is equivalent to reflecting, in real time, a posture change of the user in a workout process by using the virtual figure displayed by the electronic device.

Because the body feature of the figure can reflect a body posture of the figure, the virtual figure displayed by the electronic device can truly reflect the posture of the user. Even if the user performs workout and adjusts the posture of the user, the electronic device may correspondingly adjust a size and the posture of the virtual figure, so that the virtual figure may not deform.

In embodiments of this application, the posture of the figure and the lengths of the body parts in the body feature recognized by the electronic device may be obtained by analyzing locations of skeletal nodes of the figure in the image.

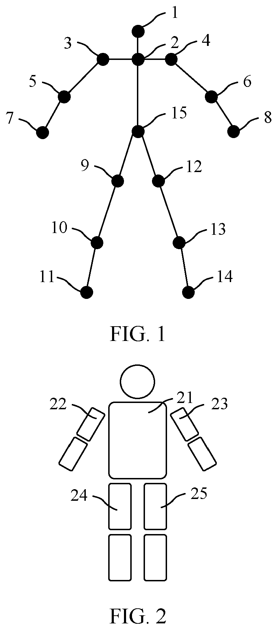

FIG. 1 shows an example of a diagram of a human body skeletal model.

As shown in FIG. 1, the human body skeletal model may include 15 skeletal nodes. Specifically, the 15 skeletal nodes may be: a head center 1, a neck center (for example, a spine center of the neck) 2, a left shoulder joint point 3, a right shoulder joint point 4, a left elbow joint point 5, a right elbow joint point 6, a left wrist joint point 7, a right wrist joint point 8, a left hip joint point 9, a left knee joint point 10, a left ankle joint point 11, a right hip joint point 12, a right knee joint point 13, a right ankle joint point 14, and a torso center (for example, a spine center on the back of the torso) 15. The skeletal nodes may also be used as standards for obtaining body part through division. For example, a body may be divided into five body parts, that is, a torso, a left arm, a right arm, a left leg, and a right leg. The torso includes the neck center 2 and the torso center 15. The left arm includes the left shoulder joint point 3, the left elbow joint point 5, and the left wrist joint point 7. The right arm includes the right shoulder joint point 4, the right elbow joint point 6, and the right wrist joint point 8. The left leg includes the left hip joint point 9, the left knee joint point 10, and the left ankle joint point 11. The right leg includes the right hip joint point 12, the right knee joint point 13, and the right ankle joint point 14. It should be noted that, in this embodiment of this application, in addition to numbering the skeletal nodes, the skeletal nodes may also be distinguished by defining names of the skeletal nodes, for example, a head, a neck, a left shoulder, a right shoulder, a left elbow, a right elbow, a left wrist, a right wrist, a left hip, a left knee, a left ankle, a right hip, a right knee, a right ankle, and the torso. Manners of defining and distinguishing the skeletal nodes are not limited in embodiments of this application. In this embodiment of this application, more or fewer skeletal nodes may be further included. FIG. 1 is merely an example for description, and a quantity of skeletal nodes is not limited.

In some implementations, an electronic device may obtain locations of the skeletal nodes, and then connect the skeletal nodes in a specific order by using lines, so that the electronic device can display a virtual figure.

In some implementations, the electronic device may determine a length (for example, a leg length or a hand length) between the skeletal nodes.

Specifically, the electronic device may determine a skeletal length between the skeletal nodes based on coordinates of the skeletal nodes. For example, vertical distances between the electronic device, and the left hip joint point 9 and the left knee joint point 10 that are of a figure in an image shot by a camera of the electronic device are: D1 and D2. In the image obtained by the electronic device, a distance L between the left hip joint point 9 and the left knee joint point 10 may be calculated based on coordinates of the left hip joint point 9 and coordinates of the left knee joint point 10. Therefore, a skeletal length X of a thigh between the left hip joint point 9 and the left knee joint point 10 may be calculated as follows: $X=\sqrt{(D2-D1)^2+L^2}$ .

In some implementations, the electronic device may determine a posture of a user. Specifically, the electronic device may determine the posture of the user based on relative locations between the skeletal nodes. For example, when the user changes from a standing state to a horse stance state, a relative distance between the neck center 2 and the torso center 15 is approximately unchanged, and a relative distance between the left hip joint point 9 and the left knee joint point 10 is closer. Further, the electronic device may determine the posture of the user based on coordinate information of the skeletal nodes.

FIG. 2 shows an example of a diagram of a virtual figure displayed on an electronic device.

As shown in FIG. 2, the electronic device may sequentially connect the skeletal nodes in FIG. 1 by using lines. Lengths of the lines may represent lengths of body parts (for example, lengths of arms and legs), and widths of the body parts may represent thickness of the body parts (for example, thickness of the arms or the waist limb). For example, the electronic device connects the neck center 2 and the torso center 15 by using a line, to display a torso 21 of the virtual figure; connects the left shoulder joint point 3, the left elbow joint point 5, and the left wrist joint point 7 by using a line, to display a left arm 22 of the virtual figure; connects the right shoulder joint point 4, the right elbow joint point 6, and the right wrist joint point 8 by using a line, to display a right arm 23 of the virtual figure; connects the left hip joint point 9, the left knee joint point 10, and the left ankle joint point 11 by using a line, to display a left leg 24 of the virtual figure; and connects the right hip joint point 12, the right knee joint point 13, and the right ankle joint point 14 by using a line, to display a right leg 25 of the virtual figure. FIG. 2 may further display a head region of the virtual figure. In this embodiment of this application, a connection relationship between the skeletal nodes is not limited to the foregoing connection relationship, and there may be another connection manner. This is not limited herein.

The lengths of the body parts of the virtual figure shown in FIG. 2 may be obtained based on connection lines between the skeletal nodes. For a manner of obtaining the widths of the body parts shown in FIG. 2, refer to detailed descriptions in subsequent method embodiments. Details are not described herein.

In this embodiment of this application, the virtual figure in a stick figure style shown in FIG. 2 is merely an example for description, and there may be another form of virtual figure image. For example, the lines used to represent the virtual figure may have different shapes, the parts of the virtual figure are directly connected, and there may be no gap between the parts. For another example, the virtual figure may further reflect skin smoothness of the figure, a skin color, wearing and a facial expression of a user, and the like. For another example, based on different apps, the virtual figure may be presented in different styles. For details, refer to detailed descriptions in subsequent method embodiments.

The following describes, by using a group of example UIs and scenario diagrams, a virtual figure display method provided in embodiments of this application.

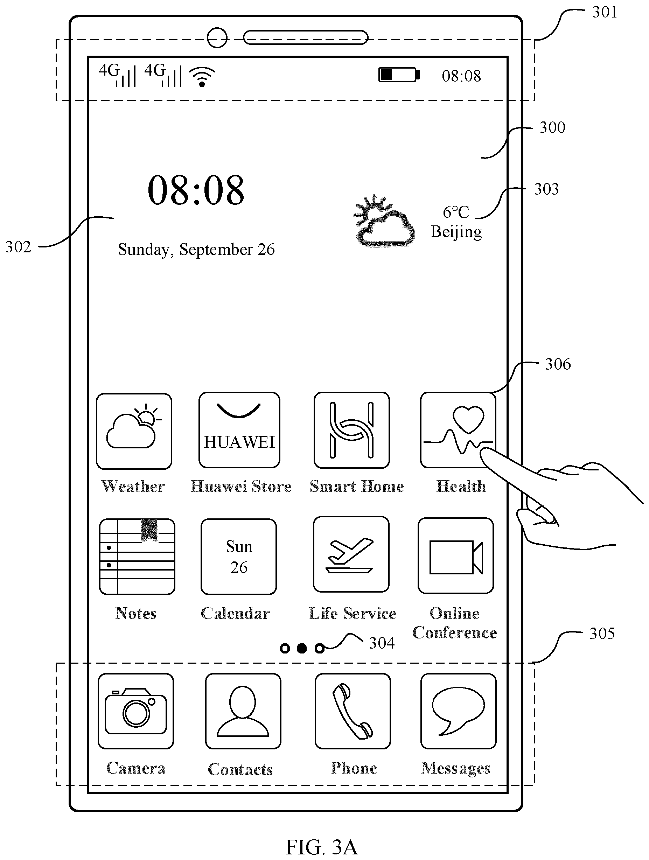

FIG. 3A to FIG. 3D show an example of a scenario in which an electronic device starts a Health app and a virtual figure display function. FIG. 3A shows an example of a user interface 300 for displaying an application menu on the electronic device. The user interface 300 may be a main interface. As shown in FIG. 3A, the user interface 300 may include but is not limited to a status bar 301, a calendar indicator 302, a weather indicator 303, a taskbar 305 with frequently used application icons, and other application icons.

The status bar 301 may include one or more signal strength indicators of a mobile communication signal (which may also be referred to as a cellular signal), an indicator of a communication signal, a time indicator, a battery status indicator, and the like.

The calendar indicator 302 may indicate current time, for example, a date, a day of a week, and hour and minute information.

The weather indicator 303 may indicate a weather type, for example, from cloudy to sunny or a light rain, and may further indicate information like a temperature.

The other application icons may be, for example, a Weather icon, a Huawei Store icon, a Smart Home icon, a Health icon 306, a Notes icon, a Calendar icon, a Life Service icon, and an Online Conference icon. The taskbar 305 with frequently used application icons may display a Camera icon, a Contacts icon, a Phone icon, a Messages icon, and the like. The user interface 300 may further include a page indicator 304. The other application icons may be distributed on a plurality of pages, and the page indicator 304 may indicate a specific page on which an application currently browsed by a user is located. The user may slide to the left or to the right in a region of the other application icons, to browse an application icon on another page.

It may be understood that FIG. 3A merely shows an example of the user interface on the electronic device, and should not constitute a limitation on embodiments of this application.

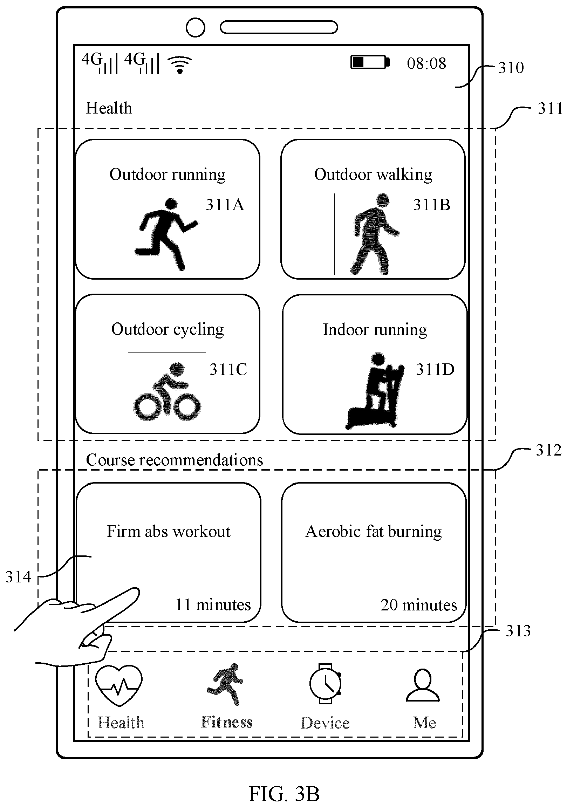

As shown in FIG. 3A, the electronic device may detect a touch operation performed on the Health icon 306 (for example, a tap operation on the icon 306). In response to the operation, the electronic device may display a user interface 310 shown in FIG. 3B. The user interface 310 may be a user interface of the "Health" application, and may be used by the user for working out and exercising. It should be noted that Health is a type of application that is installed on the electronic device and that can cooperate with the user for working out. A name of the application is not limited in embodiments of this application. In other words, the user may tap the icon 306 to display the user interface 310 of "Health".

FIG. 3B shows an example of a user interface 310 of the "Health" application on an electronic device like a smartphone. As shown in FIG. 3B, the user interface 310 may include but is not limited to a workout mode region 311, a workout course region 312, a page selection bar 313, and the like.

One or more workout mode options may be displayed in the workout mode region 311. The workout mode options may include but are not limited to an outdoor running option 311A, an outdoor walking option 311B, an outdoor cycling option 311C, an indoor running option 311D, and the like. When the user performs different types of workout, the electronic device may detect a user operation performed on the workout mode option. The user operation may be used to select a workout mode. In response to the operation, the electronic device may display a user interface of the workout mode selected by the user. Different workout standards are set for different workout modes to cooperate with the user to perform workout, and the user may select the workout mode.

One or more workout course icons may be displayed in the workout course region 312. The workout mode icons may include but are not limited to a firm abs workout icon 314, an aerobic fat burning icon, and the like.

The page selection bar 313 may include but is not limited to a Health page, a Fitness page, a Device page, and a Me page. Different pages can display different information. For example, the user interface 300 is a user interface obtained when the Health app is on the Fitness page.

It may be understood that FIG. 3B merely shows an example of the user interface on the electronic device, and should not constitute a limitation on embodiments of this application.

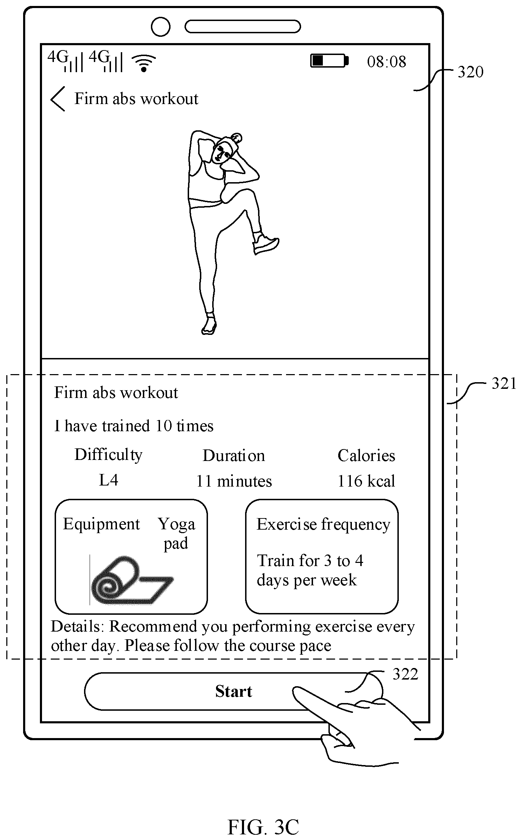

As shown in FIG. 3B, the electronic device may detect a touch operation performed on the firm abs workout icon 314 (for example, a tap operation on the icon 314). In response to the operation, the electronic device may display a user interface 320 shown in FIG. 3C.

FIG. 3C shows an example of a user interface 320 for a course in the "Health" application on an electronic device like a smartphone. As shown in FIG. 3C, the user interface 320 may include but is not limited to a course introduction region 321, a start training control 322, and the like.

The course introduction region 321 may indicate introduction information of a course selected by the user, for example, the course selected by the user, a quantity of training times completed by the user, course difficulty, course duration, burned calories, equipment used in the course, and recommended exercise frequency.

The start training control 322 may be used to display course content shown on the user interface 320.

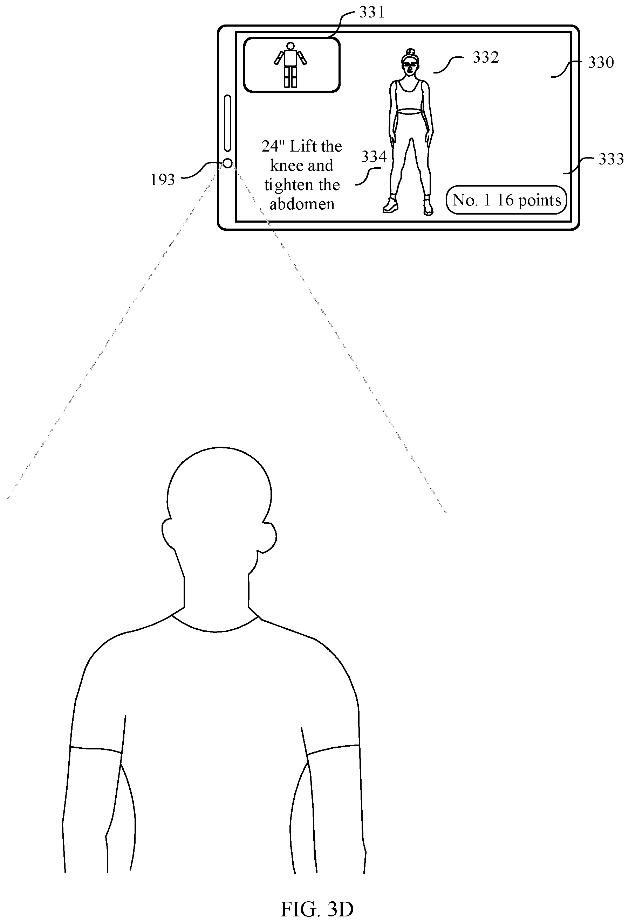

As shown in FIG. 3C, the electronic device may detect a touch operation performed on the start training control 322 (for example, a tap operation on the control 322). In response to the operation, the electronic device may display a user interface 330 shown in FIG. 3D.

FIG. 3D shows an example of a diagram of interaction between an electronic device and a user when the user performs workout. For example, FIG. 3D includes one user, and the user is in a capturing range of a camera 193 of the electronic device.

In some implementations, when the user uses an app, the user may move a limb, for example, jump, squat, lift a hand, or bend a knee. The user may further walk, for example, face the electronic device to move towards the electronic device, face the electronic device to move away from the electronic device, face the electronic device and move parallel to the electronic device. In addition, the user may use the electronic device in any posture. Using the electronic device in a standing posture by the user shown in FIG. 3D is merely an example for description. The user may alternatively use the electronic device in another posture. This is not limited in embodiments of this application. It should be noted that a quantity of displayed virtual figures in FIG. 3D is merely an example for description. In this embodiment of this application, more or fewer virtual figures may be displayed. This is not limited herein.

The electronic device displays the user interface 330. The user interface 330 is a user interface for displaying a virtual figure in a "Health" application. The user interface 330 may include but is not limited to a virtual figure display region 331, a coach display region 332, an action score region 333, action prompt information 334, and the like.

The virtual figure display region 331 may be used to display one or more virtual figures, and an action and a posture of the virtual figure are consistent with an action and a posture of the user shown in FIG. 3D. It should be noted that an image of the virtual figure shown in FIG. 3D is merely an example for description, and the virtual figure may further have another image. This is not limited thereto.

The coach display region 332 may be used to display a recorded course video demonstrated by a coach, and the user may perform workout following an action demonstrated by the coach. The coach shown in FIG. 3D is in an action preparation state, namely, a vertical standing state. In a possible implementation, the virtual figure display region 331 and the coach display region 332 may be interchanged. For example, the electronic device may respond to a tap operation performed by the user on the virtual figure display region 331. The electronic device may display the virtual figure in the coach display region 332, and display the coach figure in the virtual figure display region 331.

The action score region 333 may be used to display an action standard degree of the user. For example, a score of an action of a user 1 is 16.

The action prompt information 334 may be used to prompt the user of a current action and duration of the action. For example, actions currently performed by the user is lifting the knee and tightening the abdomen, and duration of the actions is 24 seconds.

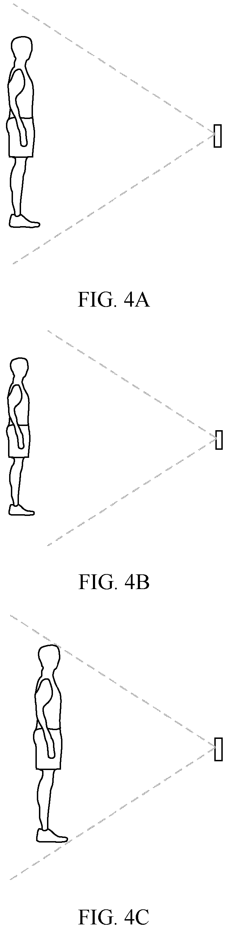

FIG. 4A to FIG. 4C are diagrams of relative locations between a user and an electronic device after the electronic device starts a virtual figure display function.

FIG. 4A shows an example of a diagram of relative locations between a user and an electronic device. The user faces the electronic device and is in a standing state, and a distance between the user and the electronic device is D0. A relative distance between the electronic device and the user may be just appropriate. In this case, a camera of the electronic device may capture a first frame of image after the electronic device displays the user interface 330. In this embodiment of this application, a posture of the user in the standing state is merely an example for description. This is not limited herein.

FIG. 4B shows an example of another diagram of relative locations between a user and an electronic device. The user faces the electronic device and is in a standing state, and a distance between the user and the electronic device is D1. In this case, a relative distance between the electronic device and the user is long relative to the relative locations shown in FIG. 4A. In this case, a camera of the electronic device may capture a second frame of image after the electronic device displays the user interface 330.

FIG. 4C shows an example of another diagram of relative locations between a user and an electronic device. The user faces the electronic device and is in a standing state, arms are in a lifted state, and a distance between the user and the electronic device is D2. In this case, a relative distance between the electronic device and the user is short relative to the relative locations shown in FIG. 4A. In this case, a camera of the electronic device may capture a third frame of image after the electronic device displays the user interface 330. It may be understood that D1 is greater than D0, and D0 is greater than D2.

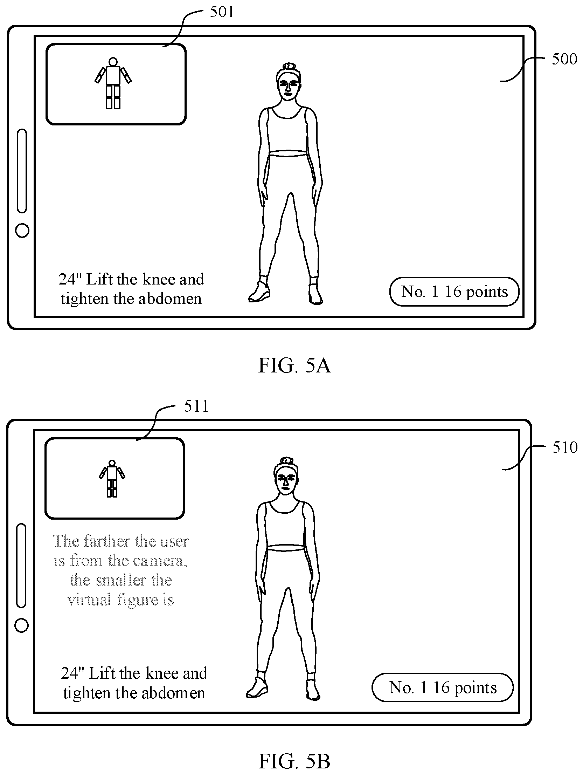

FIG. 5A to FIG. 5C show examples of displaying, by an electronic device, user interfaces of a virtual figure by using a first method. A virtual figure display method used by an electronic device shown in FIG. 5A to FIG. 5C may mean that a size of the virtual figure is related to a relative distance between a user and the electronic device.

A user interface 500 shown in FIG. 5A is a user interface for displaying a virtual figure in a "Health" application. Similarly, the user interface 500 may include but is not limited to a virtual figure display region 501, a coach display region, an action score region, action prompt information, and the like. The virtual figure shown in the virtual figure display region 501 may correspond to a figure in a first frame of image shot by the electronic device. In other words, after starting a camera, the electronic device may generate, based on the shot first frame of image including the figure, the virtual figure shown in the virtual figure display region 501. The virtual figure shown in the virtual figure display region 501 is in a standing state, and arms of the virtual figure are slightly opened. In this case, for the relative distance between the user and the electronic device, refer to the diagram shown in FIG. 4A.

A user interface 510 shown in FIG. 5B is a user interface for displaying a virtual figure in a "Health" application. Similarly, the user interface 510 may include but is not limited to a virtual figure display region 511, a coach display region, an action score region, action prompt information, and the like. The virtual figure shown in the virtual figure display region 511 may correspond to a figure in a second frame of image shot by the electronic device. In other words, after starting a camera, the electronic device may generate, based on the shot second frame of image including the figure, the virtual figure shown in the virtual figure display region 511. Similarly, the virtual figure shown in the virtual figure display region 511 is in a standing state, and arms of the virtual figure are slightly opened. In this case, for the relative distance between the user and the electronic device, refer to the diagram shown in FIG. 4B. Because the relative distance between the user and the electronic device shown in FIG. 4B is greater than the relative distance between the user and the electronic device shown in FIG. 4A, the virtual figure shown in the virtual figure display region 511 is smaller than the virtual figure shown in the virtual figure display region 501. In FIG. 5B, text information "The farther the user is from the camera, the smaller the virtual figure is" below the virtual figure display region 511 is related explanation information, and the text information is not displayed on the user interface 510.

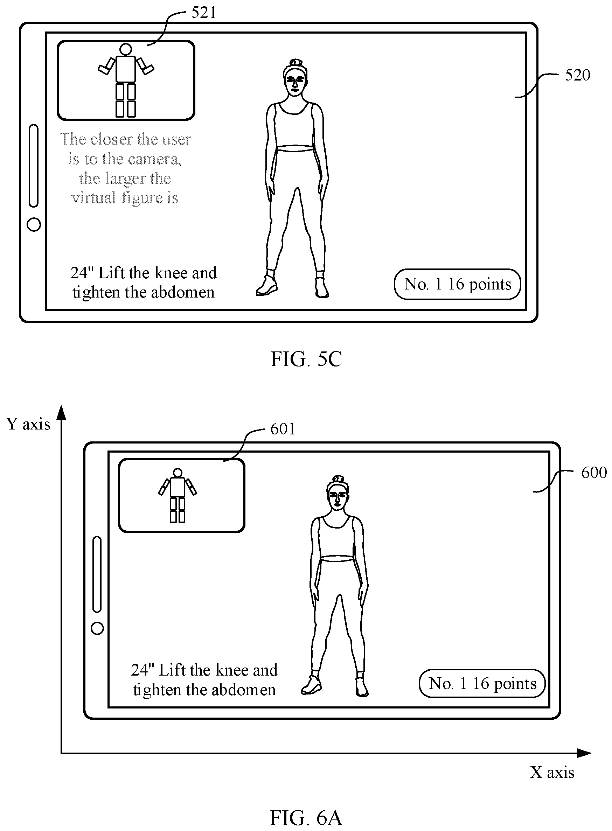

A user interface 520 shown in FIG. 5C is a user interface for displaying a virtual figure in a "Health" application. Similarly, the user interface 520 may include but is not limited to a virtual figure display region 521, a coach display region, an action score region, action prompt information, and the like. The virtual figure shown in the virtual figure display region 521 may correspond to a figure in a third frame of image shot by the electronic device. In other words, after starting a camera, the electronic device may generate, based on the shot third frame of image including the figure, the virtual figure shown in the virtual figure display region 521. Similarly, the virtual figure shown in the virtual figure display region 511 is in a standing state, palms of the virtual figure face upwards, and arms of the virtual figure are slightly curved. In this case, for the relative distance between the user and the electronic device, refer to the diagram shown in FIG. 4C. Because the relative distance between the user and the electronic device shown in FIG. 4C is less than the relative distance between the user and the electronic device shown in FIG. 4A, the virtual figure shown in the virtual figure display region 521 is larger than the virtual figure shown in the virtual figure display region 501. In FIG. 5C, text information "The closer the user is to the camera, the larger the virtual figure is" below the virtual figure display region 521 is related explanation information, and the text information is not displayed on the user interface 520.

FIG. 6A to FIG. 6C show examples of displaying, by an electronic device, user interfaces of a virtual figure by using a second method.

A user interface 600 shown in FIG. 6A is a user interface for displaying a virtual figure in a "Health" application. Similarly, the user interface 600 may include but is not limited to a virtual figure display region 601, a coach display region, an action score region, action prompt information, and the like. The virtual figure shown in the virtual figure display region 601 may correspond to a figure in a first frame of image shot by the electronic device. In other words, after starting a camera, the electronic device may generate, based on the shot first frame of image including the figure, the virtual figure shown in the virtual figure display region 501. The virtual figure shown in the virtual figure display region 501 is in a standing state, and arms of the virtual figure are slightly opened. In this case, for a relative distance between a user and the electronic device, refer to the diagram shown in FIG. 4A. However, because a virtual figure display method used by the electronic device is inconsistent with that shown in FIG. 5A, the virtual figure display method shown in FIG. 6A may mean that a size of the virtual figure displayed by the electronic device is a fixed size regardless of the relative distance between the user and the electronic device. Therefore, the size of the virtual figure shown in the virtual figure display region 601 may be inconsistent with a size of the virtual figure shown in the virtual figure display region 501. Coordinate axes shown in FIG. 6A may show examples of directions of an x-axis and a y-axis in a subsequent method procedure. Details are not described herein again.

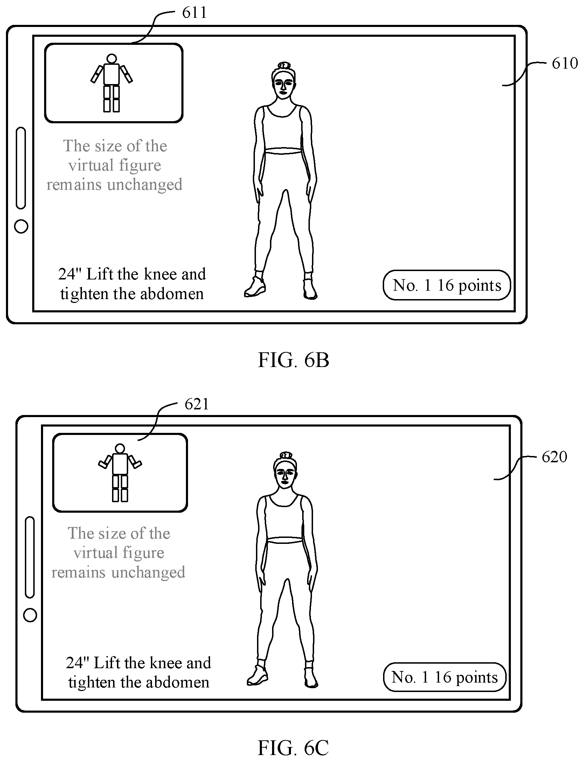

A user interface 610 shown in FIG. 6B is a user interface for displaying a virtual figure in a "Health" application. Similarly, the user interface 610 may include but is not limited to a virtual figure display region 611, a coach display region, an action score region, action prompt information, and the like. The virtual figure shown in the virtual figure display region 611 may correspond to a figure in a second frame of image shot by the electronic device. In other words, after starting a camera, the electronic device may generate, based on the shot second frame of image including the figure, the virtual figure shown in the virtual figure display region 611. Similarly, the virtual figure shown in the virtual figure display region 611 is in a standing state, and arms of the virtual figure are slightly opened. In this case, for a relative distance between a user and the electronic device, refer to the diagram shown in FIG. 4B. The relative distance between the user and the electronic device shown in FIG. 4B does not affect a size of the virtual figure shown in the virtual figure display region 611. In other words, the virtual figure shown in the virtual figure display region 611 is consistent with the virtual figure shown in the virtual figure display region 601. In FIG. 6B, text information "The size of the virtual figure remains unchanged" below the virtual figure display region 611 is related explanation information, and the text information is not displayed on the user interface 610. Optionally, a distance between a footstep of the virtual figure shown in the virtual figure display region 611 and an edge of the virtual figure display region 611 is consistent with a distance between a footstep of the virtual figure shown in the virtual figure display region 601 and an edge of the virtual figure display region 601.

A user interface 620 shown in FIG. 6C is a user interface for displaying a virtual figure in a "Health" application. Similarly, the user interface 620 may include but is not limited to a virtual figure display region 621, a coach display region, an action score region, action prompt information, and the like. The virtual figure shown in the virtual figure display region 621 may correspond to a figure in a third frame of image shot by the electronic device. In other words, after starting a camera, the electronic device may generate, based on the shot third frame of image including the figure, the virtual figure shown in the virtual figure display region 621. Similarly, the virtual figure shown in the virtual figure display region 621 is in a standing state, palms of the virtual figure face upwards, and arms of the virtual figure are slightly curved. In this case, for a relative distance between a user and the electronic device, refer to the diagram shown in FIG. 4C. The relative distance between the user and the electronic device shown in FIG. 4C does not affect a size of the virtual figure shown in the virtual figure display region 621. In other words, the virtual figure shown in the virtual figure display region 621 is consistent with the virtual figure shown in the virtual figure display region 601. In FIG. 6C, text information "The size of the virtual figure remains unchanged" below the virtual figure display region 611 is related explanation information, and the text information is not displayed on the user interface 620. Optionally, a distance between a footstep of the virtual figure shown in the virtual figure display region 621 and an edge of the virtual figure display region 621 is consistent with a distance between a footstep of the virtual figure shown in the virtual figure display region 611 and an edge of the virtual figure display region 611.

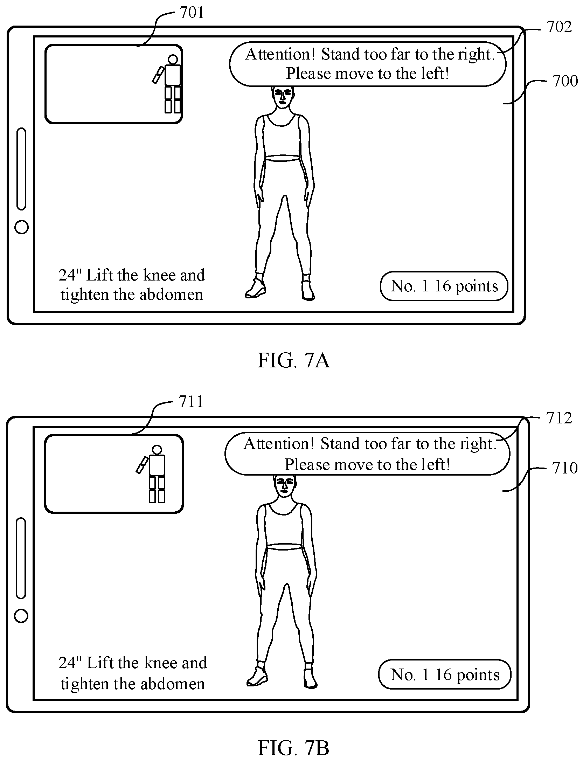

FIG. 7A to FIG. 7C show examples of user interfaces displayed when a figure in an image captured by an electronic device is incomplete.

A user interface 700 shown in FIG. 7A is a user interface for displaying a virtual figure in a "Health" application. Similarly, the user interface 700 may include but is not limited to a virtual figure display region 701, a prompt box 702, a coach display region, an action score region, action prompt information, and the like. Refer to FIG. 7A. The virtual figure shown in the virtual figure display region 701 is not completely displayed, and a right arm part of the virtual figure is missing. A reason why the virtual figure shown in FIG. 7A is not completely displayed may include that the figure in the image captured by a camera is incomplete, or the electronic device cuts off a part of the figure when cutting the image. For details, refer to subsequent content. The prompt box 702 may be used to remind a user to adjust a location of the user, and the prompt box 702 may be displayed as text information "Attention! Stand too far to the right. Please move to the left!".

A user interface 710 shown in FIG. 7B is a user interface for displaying a virtual figure in a "Health" application. Similarly, the user interface 710 may include but is not limited to a virtual figure display region 711, a prompt box 712, a coach display region, an action score region, action prompt information, and the like. Refer to FIG. 7B. The virtual figure shown in the virtual figure display region 711 is not completely displayed, and a right arm part of the virtual figure is missing. A reason why the virtual figure shown in FIG. 7B is not completely displayed may include that the figure in the image captured by a camera is blocked by another object. For details, refer to subsequent content. The prompt box 712 may be used to remind a user to adjust a location of the user, and the prompt box 712 may be displayed as text information "Attention! Stand too far to the right. Please move to the left!".

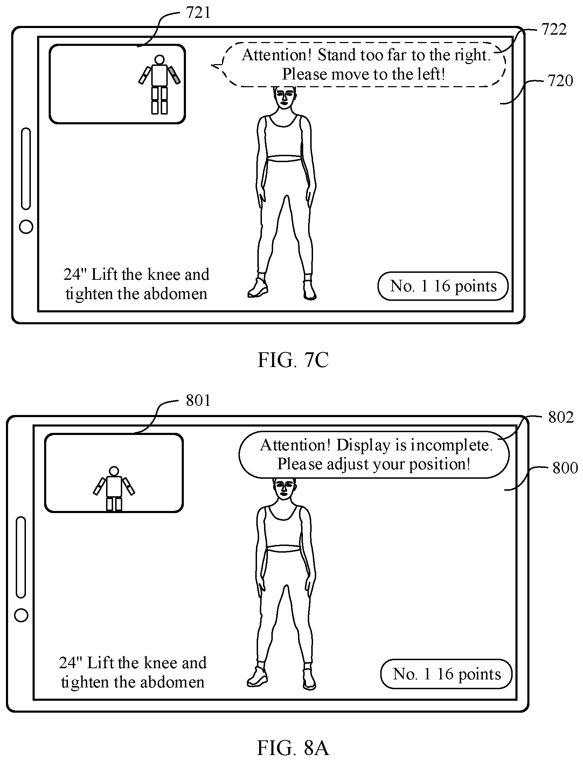

A user interface 720 shown in FIG. 7C is a user interface for displaying a virtual figure in a "Health" application. Similarly, the user interface 720 may include but is not limited to a virtual figure display region 721, a coach display region, an action score region, action prompt information, and the like. Refer to FIG. 7C. The virtual figure shown in the virtual figure display region 721 is supplemented for display. A right arm part of the virtual figure is gray, that is, the electronic device supplements the virtual figure, for example, performs mirror symmetry. For details about the supplement processing, refer to subsequent content. Optionally, when the electronic device supplements the displayed virtual figure, the user interface may display a prompt box 722 that may be used to remind a user to adjust a location of the user, and the prompt box 722 may be displayed as text information "Attention! Stand too far to the right. Please move to the left! ".

FIG. 8A to FIG. 8C show examples of user interfaces displayed when a figure in an image captured by an electronic device is incomplete.

A user interface 800 shown in FIG. 8A is a user interface for displaying a virtual figure in a "Health" application. Similarly, the user interface 800 may include but is not limited to a virtual figure display region 801, a prompt box 802, a coach display region, an action score region, action prompt information, and the like. Refer to FIG. 8A. The virtual figure shown in the virtual figure display region 801 is not completely displayed, and calf parts of the virtual figure are missing. A reason why the virtual figure shown in FIG. 8A is not completely displayed may include that the figure in the image captured by a camera is incomplete, or the electronic device cuts off a part of the figure when cutting the image. For details, refer to subsequent content. The prompt box 802 may be used to remind a user to adjust a location of the user, and the prompt box 802 may be displayed as text information "Attention! Display is incomplete. Please adjust your position!".

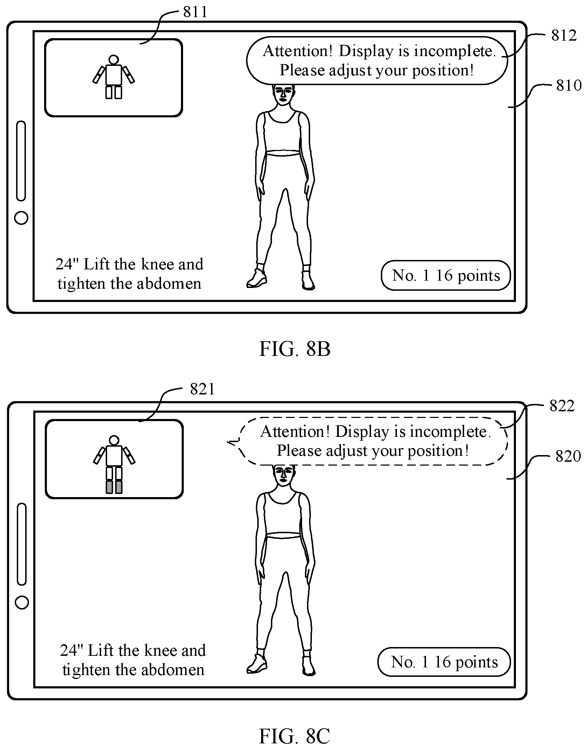

A user interface 810 shown in FIG. 8B is a user interface for displaying a virtual figure in a "Health" application. Similarly, the user interface 810 may include but is not limited to a virtual figure display region 811, a prompt box 812, a coach display region, an action score region, action prompt information, and the like. Refer to FIG. 8B. The virtual figure shown in the virtual figure display region 811 is not completely displayed, and calf parts of the virtual figure are missing. A reason why the virtual figure shown in FIG. 8B is not completely displayed may include that the figure in the image captured by a camera is blocked by another object. For details, refer to subsequent content. The prompt box 812 may be used to remind a user to adjust a location of the user, and the prompt box 812 may be displayed as text information "Attention! Display is incomplete. Please adjust your position!".

A user interface 820 shown in FIG. 8C is a user interface for displaying a virtual figure in a "Health" application. Similarly, the user interface 820 may include but is not limited to a virtual figure display region 821, a coach display region, an action score region, action prompt information, and the like. Refer to FIG. 8C. The virtual figure shown in the virtual figure display region 821 is supplemented for display. Calf parts of the virtual figure are gray, that is, the electronic device supplements the virtual figure, for example, performs vertical extension processing. For details about the supplement processing, refer to subsequent content. Optionally, when the electronic device supplements the displayed virtual figure, the user interface may display a prompt box 822 that may be used to remind a user to adjust a location of the user, and the prompt box 822 may be displayed as text information "Attention! Display is incomplete. Please adjust your position!".

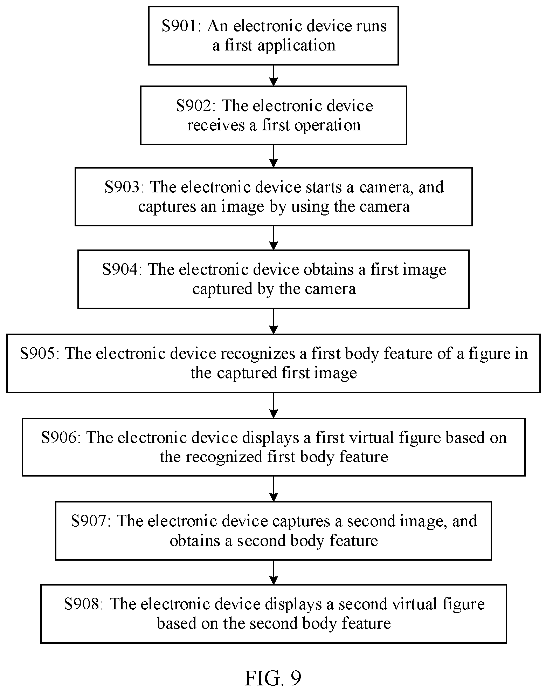

FIG. 9 is a schematic flowchart of a virtual figure display method according to an embodiment of this application.

FIG. 9 shows an example of the virtual figure display method used by an electronic device.

As shown in FIG. 9, the virtual figure display method specifically includes the following steps.

S901: The electronic device runs a first application.

In some implementations, the electronic device may detect a user operation performed by a user on an icon of the first application in an application interface menu, and run the first application in response to the operation. User operations may include but are not limited to a tap operation, a double-tap operation, a touch operation, a speech instruction, a gesture instruction, and the like of the user. The electronic device may further jump to run the first application by performing a corresponding user operation in another application. A manner of running the first application is not limited in embodiments of this application. For example, refer to the user interface 300 shown in FIG. 3A. The electronic device may detect a user operation performed by the user on the icon 306 of the "Health" application, and run the "Health" application in response to the operation.

The first application may be an application pre-installed in a system of the electronic device, or may be a third-party application that is normally installed in the electronic device, or may be implemented as an applet, a web page, or the like. This is not limited herein.

In this embodiment of this application, the first application may support the electronic device to capture an image; and may further support the electronic device to recognize a figure in the image, and display a virtual figure based on a body feature of the figure. The first application may further support the electronic device to analyze the body feature of the figure in the image.

Specifically, a type of the first application may include but is not limited to: a sports application (for example, a fitness app or a dance app), a game application (for example, a motion sensing game), and the like.

For example, when the user works out by using the electronic device, the sports application may display a virtual figure reflecting a change of a motion of the user, so that the user observes a workout result of the user in real time. For another example, when the user plays an entertainment game by using the electronic device, the game application may display a virtual figure image, so that the user obtains better game experience.

S902: The electronic device receives a first operation.

In some implementations, after running the first application, the electronic device may receive the first operation for the first application. Specifically, the first operation may be a user operation used to trigger, in the sports application, the user to follow a coach to work out, and the first operation may alternatively be a user operation used to trigger a start of the motion sensing game in the game application. In this embodiment of this application, in addition to the foregoing types of first operations, more types of first operations may be included. This is not limited herein. The first operations may include but are not limited to a tap operation, a double-tap operation, a touch operation, a speech instruction, a gesture instruction, and the like of the user. For example, the first operation may be specifically the touch operation that is received by the electronic device and that is for the start training control 322 in FIG. 3C.

S903: The electronic device starts a camera, and captures the image by using the camera.

In some implementations, after receiving the first operation, in response to the first operation, the electronic device may capture the image in a shooting range of the camera by using the camera. Generally, because the user needs to observe an action of the user on a display of the electronic device, a camera, namely, a front-facing camera, on a side on which the display of the electronic device is located captures the image. However, the user may also change the camera for capturing the image. Optionally, when the electronic device performs projection, the user may observe the action of the user from a projection device (for example, a projection screen), and the user may observe a posture and the action of the user without facing the display of the electronic device. In this case, the electronic device may change the camera for capturing the image. For example, the electronic device may capture the image by using a rear-facing camera. In this embodiment of this application, an application scenario in which the rear-facing camera is used is not limited, and there may be more application scenarios in which the rear-facing camera may be used to capture the image.

In a possible implementation, the electronic device may immediately start the camera after automatically starting the first application, and start to continuously collect image information. Alternatively, the electronic device may start the camera after receiving the first operation, and then start to continuously collect image information. This is not limited in embodiments of this application.

In some implementations, images captured by the electronic device may be inconsistent at different time points, and the image depends on an action, a location, and the like of the user at a current time point. Specifically, when the electronic device captures the images, there are a plurality of locations of the user. For example, the location of the user may be relatively close to the electronic device, or may be relatively far away from the electronic device, or may be changed in parallel with the electronic device. There may further be more locations of the user. When the electronic device captures the image, there are a plurality of postures of the user. For example, the user may change the posture of the user by performing an action like squatting, jumping up, lifting a hand, or bending a knee. In this embodiment of this application, the actions and the postures of the user are merely used as examples for description. This is not limited herein.

For example, FIG. 4A to FIG. 4C show the examples of the postures of the user and the relative locations between the user and the electronic device after the electronic device starts the camera. The relative locations between the user and the electronic device shown in FIG. 4B are farther than the relative locations between the user and the electronic device shown in FIG. 4A, and the relative locations between the user and the electronic device shown in FIG. 4C are closer than the relative locations between the user and the electronic device shown in FIG. 4A.

When locations of the user relative to the electronic device are different, the images captured by the camera of the electronic device may be inconsistent. For example, sizes of figures in the images may be different. Specifically, when the user is relatively close to the camera, the virtual figure in the image is large; or when the user is relatively far away from the camera, the virtual figure in the image is small.

For example, FIG. 5A to FIG. 5C show the examples of the sizes of the virtual figures displayed on the electronic device. The virtual figure shown in FIG. 5B is smaller than the virtual figure shown in FIG. 5A, and the virtual figure shown in FIG. 5C is larger than the virtual figure shown in FIG. 5A.

S904: The electronic device obtains a first image captured by the camera.

In some implementations, after starting the camera, the electronic device may start to capture the image. Because the electronic device needs to generate, based on information about the figure in the image, the virtual figure corresponding to the user, the electronic device needs to recognize a valid image that includes the figure. An image that does not include the figure is an invalid image. In this embodiment of this application, the electronic device analyzes only on the image including the figure.

In some implementations, the electronic device may recognize whether the image includes the figure. Specifically, the electronic device may determine, by processing the image, extracting the feature, and performing mode recognition on the feature, whether the image includes the figure. The electronic device may further recognize, by using a deep learning method, whether the image includes the figure. In this embodiment of this application, a method for the electronic device to recognize the figure in the image is not limited, and more or fewer methods may be further included.

In a possible implementation, the electronic device may further recognize a quantity of figures in the image. The quantity may be zero, or may be one or more. This is not limited herein.

In some implementations, when a distance between the user and the electronic device is of a first value, the electronic device captures the first image.

In some implementations, because the image captured by the electronic device may include the figure, or may not include the figure, the electronic device may prompt the user that the user does not enter a capture range of the camera. Specifically, the electronic device may generate prompt information before capturing the first image. For example, the electronic device may display text information "No user detected. Please adjust your position". In this way, the user may be prompted to enter the capture range of the camera, so that the electronic device can generate the image including the figure. Further, that the user does not enter the capture range is not limited to be prompted at start time obtained after the camera is started. In a process in which the electronic device runs the first application and starts the camera, a corresponding prompt may be generated provided that the electronic device recognizes that the image captured by the electronic device does not include the figure. The foregoing prompt information used to prompt the user to enter the capture range of the camera may be referred to as first prompt information.

In some implementations, the image captured by the electronic device at the start time of the camera includes the figure. However, because the posture of the user is unpredictable, the user may be at a non-standard location and/or in a non-standard posture. This may affect subsequent analysis of the body feature of the figure by the electronic device. In this case, the electronic device may prompt the user that the user is at the standard location and/or in the standard posture. The standard location may be a location that can make the displayed virtual figure complete, for example, a central location of the capture range. The standard posture may refer to that the electronic device may obtain almost real limb lengths of the figure based on the image, where limbs of the virtual figure are presented on a same plane or approximately a same plane, and for example, may be a posture in which arms naturally fall in a standing state. Before capturing the first image, the electronic device may display the prompt information. For example, the electronic device may display text information "Please stand in the center. About to start", and may prompt the user to be in the standard location (for example, a location in the center of the image) and/or the standard posture (for example, a standing posture). In other words, when the user is in the standard location and/or the standard posture, there is no obstacle between body parts of the user. After detecting that the user is in the standard location and/or the standard posture, the electronic device may capture an image in which the user is in the standard location and/or the standard posture. The prompt information used to remind the user being in the standard location and/or the standard posture may be referred to as second prompt information.

In a possible implementation, the electronic device may not generate the prompt information, and the user adjusts the location and the posture of the user after observing the display of the electronic device.

Based on the foregoing location of the user, in this embodiment of this application, the first image may also be described in two cases:

In a first case, the first image may be a first frame of image that includes the figure and that is captured after the camera is started when the electronic device runs the first application. In other words, the first image may be a first frame of image captured by the camera after the camera is started, or may not be a first frame of image captured by the camera. In addition, the first image may include a complete figure, or may include only a partial figure. In a second case, the first image may be a first frame of image in which the user is in the standard location and/or the standard posture and that is captured after the camera is started when the electronic device runs the first application. In this case, the first image includes a complete figure. However, the first image may be a first frame of image captured by the camera after the camera is started, or may not be a first frame of image captured by the camera.

S905: The electronic device recognizes a first body feature of the figure in the captured first image.

In some implementations, there may be one or more figures in the first image. The electronic device may distinguish between different figures in the first image based on a distance between the figures in the first image, or may distinguish between different figures in the first image based on normal postures of human body limbs. This is not limited herein. When there are a plurality of figures in the first image, the electronic device needs to separately recognize respective first body features for different figures. In addition, because distances between the plurality of figures in the first image and the electronic device may be different, sizes of the plurality of different figures may also be different.

The following provides descriptions by using an example in which there is one figure in the first image.

In some implementations, the electronic device may analyze the image captured by the camera. Specifically, the electronic device may recognize the first body feature of the figure in the captured first image.

The first body feature includes a posture of the figure in the first image and lengths of parts of the figure in the first image. Optionally, the first body feature may further include but is not limited to: skin smoothness of the figure in the first image, wearing of the figure in the first image, a facial expression of the figure in the first image, and widths of the parts of the figure in the first image.

The lengths of the parts of the figure in the first image may be obtained based on skeletal nodes of the figure in the first image captured by the electronic device. For related information of the skeletal node, refer to the foregoing detailed descriptions in FIG. 1. In some implementations, skeletal node information obtained by the electronic device may be coordinates of the skeletal nodes in the image, and the electronic device may calculate a first line length based on the coordinates of the skeletal nodes of the figure in the first image. In this embodiment of this application, there may be another manner of obtaining the first line length based on the skeletal nodes of the figure in the first image. This is not limited herein.

In some implementations, the electronic device may recognize, by using a neural network algorithm based on a skeletal node recognition technology, for example, a convolutional neural network (CNN) algorithm, image data collected by the camera, to determine the skeletal nodes of the figure in the shot image. In this embodiment of this application, the skeletal node recognition technology is not limited, and there may be another algorithm for determining the skeletal node.

Specifically, the electronic device may obtain the first line length based on the skeletal nodes. For example, the first line length may include a left arm length, a right arm length, a left leg length, a right leg length, and a torso length. For example, a left arm length L1 may be a sum of a distance between a left shoulder joint point 3 and a left elbow joint point 5 of the figure in the first image and a distance between the left elbow joint point 5 and a left wrist joint point 7 of the figure in the first image. A right arm length L2 may be a sum of a distance between a right shoulder joint point 4 and a right elbow joint point 6 of the figure in the first image and a distance between the right elbow joint point 6 and a right wrist joint point 8 of the figure in the first image. A left leg length L3 may be a sum of a distance between a left hip joint point 9 and a left knee joint point 10 of the figure in the first image and a distance between the left knee joint point 10 and a left ankle joint point 11 of the figure in the first image. A right leg length L4 may be a sum of a distance between a right hip joint point 12 and a right knee joint point 13 of the figure in the first image and a distance between the right knee joint point 13 and a right ankle joint point 14 of the figure in the first image. A torso length L5 may be a distance between a neck center and a torso center 15 of the figure in the first image.

In a possible implementation, the electronic device may determine the widths of the parts of the figure in the first image based on normal proportions of the human body limbs and the lengths of the parts of the figure in the first image, or may determine the widths of the parts of the figure in the first image by using a portrait segmentation method. This is not limited in embodiments of this application. Portrait segmentation may be separating a portrait from a background in an image, so that the electronic device can determine pixel sizes occupied by parts, thereby determining a first line width. The first line width may specifically include a left arm width, a right arm width, a left leg width, a right leg width, and a torso width.

In some implementations, both the first line length and the first line width may be calculated in a unit of a pixel.

The skin smoothness of the figure in the first image and the wearing of the figure in the first image may be obtained based on information like a color of a corresponding part detected by the electronic device, for example, a color of a pixel of a skin location or a clothing location of the figure in the first image.

S906: The electronic device displays a first virtual figure based on the recognized first body feature.

In some implementations, the electronic device may generate the first virtual figure based on the first body feature, and display the first virtual figure in a first region of the display. The first region may be in a regular shape or an irregular shape. The first region may be presented as a rectangle, or may be in another shape, for example, a circle or a diamond. The first region may be disposed at the upper left corner of the display in landscape orientation display, or may be a movable first region, that is, the first region may be disposed in any location on the display. For example, for the first region, refer to the virtual figure display region 501 shown in FIG. 5A. In this embodiment of this application, attributes such as a shape, a size, and a location that are of the first region, and whether the first region can be movable are not limited.

In some implementations, the electronic device may display the first virtual figure based on the first body feature. Optionally, skin, a hairstyle, and wearing of the first virtual figure may be selected by the user in the first application, or may be preset by the electronic device. This is not limited herein. The first virtual figure displayed by the electronic device may be displayed in two display modes:

Mode 1: A body feature of the first virtual figure displayed by the electronic device is the same as the recognized first body feature.

In some implementations, a posture of the first virtual figure displayed by the electronic device is the same as the posture of the figure in the first body feature, and lengths of parts of the first virtual figure displayed by the electronic device are the same as the lengths of the parts of the figure in the first body feature. It should be noted that, the lengths of the body parts being the same mentioned above does not mean that the lengths are same, but means that relative proportions between the body parts of the first virtual figure are the same as relative proportions between the body parts of the figure in the first image. Because a size of the image captured by the electronic device is not necessarily consistent with that of the first region displaying the virtual figure, the length of the body part of the first virtual figure is in a first proportion to the length of the body part of the figure in the first image. After the first image is zoomed in or out based on the first proportion, the first image may meet a range of the first region, that is, may be less than or equal to the range of the first region. Generally, a larger first region indicates a larger first proportion. In addition, different cameras of the electronic device capture images, and obtained first proportions are also different, different first regions are set in the electronic device, and the first proportions may also be different.

Optionally, skin smoothness of the first virtual figure displayed by the electronic device is the same as the skin smoothness of the figure in the first body feature. Wearing of the first virtual figure displayed by the electronic device is the same as the wearing of the figure in the first body feature. A facial expression of the first virtual figure displayed by the electronic device is the same as the facial expression of the figure in the first body feature. Widths of the parts of the first virtual figure displayed by the electronic device are the same as the widths of the parts of the figure in the first body feature.

For example, FIG. 5A is a diagram in which the electronic device displays the first virtual figure in the foregoing mode 1. The lengths of the parts and the posture of the virtual figure in the virtual figure display region 501 are consistent with the lengths of the parts and the posture of the figure in the first body feature. Both the virtual figure and the user are in the standing state, and arms of the virtual figure and the user are slightly spread. When the electronic device displays the first virtual figure in the mode 1, a length of the first virtual figure shown in FIG. 5A is the first line length, and a width of the first virtual figure is the first line width.

Mode 2: The electronic device displays the first virtual figure in a fixed size.

In some implementations, the electronic device may first generate a preprocessed virtual figure based on the first body feature, and then zoom in or out the preprocessed virtual figure, to zoom in or out a preprocessed virtual figure of a first size to a first virtual figure of a second size. The second size is the fixed size. It should be noted that the preprocessed virtual figure is not displayed on the display of the electronic device.

A principle of zooming in or out may be that the first virtual figure of the second size can be completely displayed in a display range even when the first virtual figure is fully spread (for example, the user stands straight and stretches hands up). The size of the virtual figure may be a proportion of the entire virtual figure or a body part of the virtual figure on the display.

In some implementations, the display range may be referred to as the first region.

Specifically, the electronic device may first zoom in or out, based on a size of the display range, the preprocessed virtual figure with the first line length and the first line width, and then the electronic device may display the first virtual figure based on a first display length and a first display width obtained through zooming.

For example, the electronic device may obtain the skeletal node information in the first image. Specifically, the electronic device may obtain the first line length of connection lines between the skeletal nodes in the shot first image, for example, the left arm length L1, the right arm length L2, the left leg length L3, the right leg length L4, and the torso length L5. For a specific method for obtaining the first line length, refer to detailed descriptions in S905. Details are not described herein again. In addition, the electronic device may further obtain a hand lifting distance of the figure in the first image, that is, a hand lifting distance Hperson. The hand lifting distance may be a sum of a height of the figure in the first image and the arm length. For example, when the user is in the vertical standing state, the electronic device may calculate the hand lifting distance Hperson according to a formula Hperson = L1 + L3 + L4. The hand lifting distance Hperson calculated herein can avoid a case in which a partial virtual figure obtained by the electronic device subsequently exceeds the display range.

In some implementations, the electronic device may further obtain a display range of the virtual figure, that is, a display width $W_{show}$ and a display height $H_{show}$, based on the display range set in the first application. $W_{show}$ and $H_{show}$ may be a width and a height of the display of the electronic device, or may be a width and a height of a smaller display range, and are determined herein based on a related setting of the first application. In some implementation ranges, after obtaining the display range of the virtual figure, the electronic device may determine an appropriate display height $h_{show}$ of the virtual figure. Generally, the height displayed for the virtual figure is not consistent with the display height of the display range, which causes poor visual perception of the user. In addition, a part (for example, a region from a bottom of the virtual figure to a bottom of the display range) of the display range is further reserved to represent a virtual ground. For example, the electronic device may calculate the appropriate display height of the virtual figure according to a formula $h_{show} = a \cdot H_{show}$, where a value range of a is (0, 1). In a possible implementation, a value of a is 0.9. In this case, the visual perception of the user is good.

The electronic device may further be provided with the virtual ground, so that the user can watch the virtual figure more clearly. The electronic device may obtain a distance $y_{group}$ between the virtual ground and the bottom of the display range. For example, the electronic device may calculate the distance $y_{group}$ between the virtual ground and the bottom of the display range according to a formula $y_{group} = (1 - a) \cdot H_{show}$. In a possible implementation, the electronic device may alternatively set $y_{group} < (1 - a) \cdot H_{show}$. This is not limited. For example, if the electronic device sets the value of a to 0.9, $h_{show} = 0.9 H_{show}$ and $y_{group} = 0.05 H_{show}$. There is a display region of a height of $0.05 H_{show}$ in the display range. The electronic device may set the display region of the height of $0.05 H_{show}$ above a top of the displayed virtual figure.

The electronic device may further obtain a change rate $Scale_{calibration}$ of coordinates of the first virtual figure relative to the coordinates of the skeletal nodes of the figure in the first image based on the hand lifting distance $H_{person}$ and the appropriate display height $h_{show}$. For example, the electronic device may calculate the change rate of the coordinates according to $Scale_{calibration} = h_{show}/H_{person}$. Calculating the change rate of the coordinates based on the hand lifting distance Hperson can avoid a phenomenon that when the user lifts the hand, a hand of the displayed first virtual figure exceeds the display range, and consequently the first virtual figure is not completely displayed.

The electronic device may further obtain coordinates $P_{show1}$ of skeletal nodes of the first virtual figure based on the change rate $Scale_{calibration}$ and the coordinates $P_{calibration}$ of the skeletal nodes of the figure in the first image. The coordinates $P_{show1}$ may be represented as $(X_{show1}, Y_{show1})$. For example, the electronic device may calculate the coordinates of the skeletal nodes of the first virtual figure according to $P_{show1} = Scale_{calibration} * P_{calibration1}$. In this embodiment of this application, setting of a coordinate axis direction and a coordinate origin is not limited, and there may be another setting manner. Optionally, the coordinate origin may be set at a center of the skeletal nodes of the figure in the first image. This can ensure that a subsequently obtained location of the first virtual figure may correspond to the skeletal nodes of the figure in the first image. It is assumed that $h_{show} = H_{person}$. To be specific, the appropriate display height is the hand lifting distance, a value of $Scale_{calibration}$ is 1, and $P_{show1} = P_{calibration1}$. In other words, when the appropriate display height is the hand lifting distance, the coordinates of the skeletal nodes of the figure in the first image are the coordinates of the skeletal nodes of the displayed first virtual figure. It should be noted that the first virtual figure obtained through only change rate conversion is an unfixed first virtual figure.

Further, the electronic device may further fixedly display the first virtual figure on the virtual ground. In other words, a y-axis coordinate of a foot part of the fixed first virtual figure is consistent with a y-axis coordinate of the virtual ground. The electronic device may first obtain, based on $y_{group}$ and a y-axis coordinate $P_{show1}(foot)[y]$ of a foot part of the obtained unfixed first virtual figure, a distance $y_{gap1}$ between the foot part of the obtained unfixed first virtual figure and the virtual ground. In other words, the electronic device may obtain, based on the unfixed first virtual figure, a distance that the fixed first virtual figure needs to be moved along the y-axis shown in FIG. 6A. For example, the electronic device may calculate, according to $y_{gap1} = P_{show1}(foot)[y] - y_{group}$, a distance that the unfixed first virtual figure needs to be moved along the y-axis if the first virtual figure needs to be fixedly displayed on the virtual ground. Then, the electronic device may further obtain coordinates $P'_{show1}$ of skeletal nodes of the fixed first virtual figure based on

$y_{gap1}$ and coordinates $P_{show1}$ of the skeletal nodes of the unfixed first virtual figure. For example, the electronic device may obtain y-axis coordinates of the skeletal nodes of the fixed first virtual figure according to

$$P'_{show1[y]} = P_{show1[y]} - y_{gap1}.$$

$P'_{show1[y]}$ represents the y-axis coordinates of the skeletal nodes of the fixed first virtual figure, and $P_{show1[y]}$ represents y-axis coordinates of the skeletal nodes of the unfixed first virtual figure. It may be understood that, because only values of the y-axis coordinates change in the coordinates of the fixed first virtual figure that are obtained based on the coordinates of the unfixed first virtual figure, x-axis coordinates of the skeletal nodes of the unfixed first virtual figure are consistent with x-axis coordinates of the skeletal nodes of the fixed first virtual figure.

FIG. 6A is an example of a diagram in which the electronic device displays the first virtual figure in the foregoing mode 2. A size of the virtual figure shown in FIG. 6A is a fixed size. When the electronic device displays the first virtual figure in the mode 2, a length of the first virtual figure shown in FIG. 6A is the first display length, and a width of the first virtual figure is the first display width.

It may be understood that the first region mentioned in the foregoing mode 1 and mode 2 may be a same display range, or may be different display ranges. This is not limited herein.

S907: The electronic device captures a second image, and obtains a second body feature.

In some implementations, after displaying the first virtual figure, the electronic device may obtain the second body feature. The second image may be any frame of image captured after the camera of the electronic device captures the first image.

In some implementations, when the distance between the user and the electronic device is of the first value, the electronic device captures the first image.

The second body feature includes a posture of a figure in the second image and lengths of parts of the figure in the second image. Optionally, the second body feature may further include but is not limited to: skin smoothness of the figure in the second image, wearing of the figure in the second image, a facial expression of the figure in the second image, and widths of the parts of the figure in the second image.

For obtaining manners of several items in the second body feature other than the widths of the parts, refer to the foregoing corresponding manners of obtaining the first body feature. Details are not described herein again. The width of the parts in the second body feature may be calculated based on a change proportion of the lengths of the parts in the first body feature to the lengths of the parts in the second body feature.

The lengths of the parts of the figure in the second image may be obtained based on skeletal nodes of the figure in the second image captured by the electronic device. For related information of the skeletal node, refer to the foregoing detailed descriptions in FIG. 1. In some implementations, skeletal node information obtained by the electronic device may be coordinate information of the skeletal nodes in the image, and the electronic device may calculate a second line length based on coordinates of the skeletal nodes of the figure in the second image. In this embodiment of this application, there may be another manner of obtaining the second line length based on the skeletal nodes of the figure in the second image. This is not limited herein.

Generally, the skin smoothness of the figure in the second image and the wearing of the figure in the second image are the same as the skin smoothness of the figure in the first image and the wearing of the figure in the first image.

In some implementations, when using the electronic device, the user may change a location at any time. The user may face the electronic device to move towards or move away from the electronic device, or may face the electronic device and move in parallel with the electronic device. Therefore, the figure in the second image may be smaller than the figure in the first image, or may be larger than the figure in the first image.

For example, when the user moves away from the electronic device, the camera of the electronic device may capture the second image, and may obtain the skeletal node information of the figure in the second image. It may be understood that, when the user moves away from the electronic device, the electronic device cannot ensure that the user in the image captured by the camera is located in a center of the image. Therefore, locations of the skeletal nodes of the figure in the second image are not necessarily located in the center of the second image. The locations of the skeletal nodes obtained by the electronic device are determined based on the location of the user in the image shot by the camera of the electronic device.

FIG. 4B is an example of a diagram of a scenario in which the electronic device captures the second image. FIG. 6A is a diagram of a side scenario in which the camera of the electronic device captures the second image when the user faces the electronic device and moves away from the electronic device. As shown in FIG. 4B, the user on the left side stands towards the electronic device, a rectangle shown on the right side is the electronic device that captures the image, and the distance between the user and the electronic device is D1.

In comparison with the figure in the first image, the figure in the second image captured by the electronic device shown in FIG. 4B is smaller. In other words, a skeletal model including all the skeletal nodes of the figure in the second image captured by the electronic device shown in FIG. 4B is also smaller than a skeletal model including all the skeletal nodes of the figure in the first image. The electronic device may obtain the second line length of the virtual figure based on the skeletal nodes of the figure in the second image. Specifically, the second line length may also be line lengths of parts.

For example, the second line length may include a left arm length l1, a right arm length l2, a left leg length l3, a right leg length l4, and a torso length l5. For the left arm length l1, the right arm length l2, the left leg length l3, the right leg length l4, and the torso length l5, refer to detailed descriptions in S905. Details are not described herein again. It should be noted that the locations of the skeletal nodes of the figure in the second image may be determined by an action of the user when the electronic device captures the second image. The skeletal nodes of the figure in the second image may reflect an action of the user being in the standing state and hooks an arm upward. The user may alternatively have another action. This is not limited herein.

For another example, when the user moves towards the electronic device, the camera of the electronic device may capture the second image, and may obtain the skeletal node information of the figure in the second image.

FIG. 4C is an example of a diagram of a scenario in which the electronic device captures the second image. FIG. 4C is a diagram of a side scenario in which the camera of the electronic device captures the second image when the user faces the electronic device and moves towards the electronic device. As shown in FIG. 4C, the user on the left side stands towards the electronic device, a rectangle shown on the right side is the electronic device that captures the image, and the distance between the user and the electronic device is D2. It may be understood that D2 is less than D1 because the user in FIG. 4B moves away from the electronic device, and the user in FIG. 4C moves towards the electronic device.

In comparison with the figure in the first image, the figure in the second image captured by the electronic device shown in FIG. 4C is larger. In other words, a skeletal model including all the skeletal nodes of the figure in the second image captured by the electronic device shown in FIG. 4C is also larger than a skeletal model including all the skeletal nodes of the figure in the first image. The electronic device may obtain the second line length of the virtual figure based on the skeletal nodes of the figure in the second image. Specifically, the second line length may also be line lengths of parts. For example, the second line length may include a left arm length l1, a right arm length l2, a left leg length l3, a right leg length l4, and a torso length l5. For the left arm length l1, the right arm length l2, the left leg length l3, the right leg length l4, and the torso length l5, refer to detailed descriptions in S905. Details are not described herein again. It should be noted that the locations of the skeletal nodes of the figure in the second image may be determined by an action of the user when the electronic device captures the second image. The skeletal nodes of the figure in the second image may reflect an action of the user being in the standing state. This is not limited herein.

Optionally, when the user does not move towards or move away from the electronic device, but the user performs a limb movement change, the electronic device may also obtain the skeletal node information of the user, and the electronic device may obtain the second line length based on the obtained skeletal node information. For example, if the user squats, the left leg length l3 and the right leg length l4 change greatly in comparison with the left leg length L3 and the right leg length L4, and other lengths basically remain unchanged. The electronic device may determine, based on the change, that the user does not move towards or move away from the electronic device. In this way, the electronic device can calculate a second line width more accurately subsequently, thereby avoiding an error.

S908: The electronic device displays the second virtual figure based on the second body feature.

In some implementations, the electronic device may display the second virtual figure based on the second body feature. The second virtual figure displayed by the electronic device may be displayed in two display modes:

Mode 1: A partial body feature of the second virtual figure displayed by the electronic device is the same as the recognized second body feature.

In some implementations, the electronic device may display a second virtual figure with the second line length. The partial body feature may be the second line length. It should be noted that, the lengths of the body parts being the same mentioned above does not mean that the lengths are same, but means that the relative proportions between the body parts of the first virtual figure are the same as the relative proportions between the body parts of the figure in the first image. Because the size of the image captured by the electronic device is not necessarily consistent with that of the first region displaying the virtual figure, the length of the body part of the first virtual figure is in the first proportion to the length of the body part of the figure in the first image. After the first image is zoomed in or out based on the first proportion, the first image may meet the range of the first region, that is, may be less than or equal to the range of the first region. Generally, the larger first region indicates the larger first proportion. In addition, different cameras of the electronic device capture the images, and the obtained first proportions are also different, different first regions are set in the electronic device, and the first proportions may also be different.

Because the electronic device does not recognize the widths of the parts of the figure in the second image, that is, the electronic device does not obtain the second line width, and if the electronic device displays the second virtual figure only by using the second line length and the first line width, a phenomenon that the displayed second virtual figure is excessively long or excessively wide and fat occurs.

For example, the electronic device is located at the location shown in FIG. 4B and obtains the second line length of the figure in the second image. If the electronic device displays the virtual figure by using the first line width and the second line length, and because the second line length is shorter than the first line length, and the line width of the virtual figure does not change, a proportion of the line length to the line width of the displayed virtual figure is unbalanced, resulting in a phenomenon that the virtual figure with the first line width and the second line length is observed as excessively wide and fat from a perspective of the user, causing poor visual perception of the user.

For another example, the electronic device is located at the location shown in FIG. 4C and obtains the second line length of the figure in the second image. If the electronic device displays the virtual figure by using the first line width and the second line length, and because the second line length is longer than the first line length, and the line width of the virtual figure does not change, a proportion of the line length to the line width of the displayed virtual figure is unbalanced, resulting in a phenomenon that the virtual figure with the first line width and the second line length is observed as excessively slender from a perspective of the user, causing poor visual perception of the user.

Therefore, in some implementations, the electronic device needs to determine the second line width of the virtual figure based on a change proportion of the first line length to the second line length, and then display a virtual figure with the second line length and the second line width. In this way, the foregoing problem of deformity of the virtual figure can be avoided.

Specifically, the electronic device has learned the first line length and the first line width of the figure in the first image and the second line length of the figure in the second image in S906 and S907. The electronic device may calculate the proportion of the first line length to the second line length, and then multiply the first line width by the proportion to obtain the second line length. In other words, the second line length is increased or decreased by x times in comparison with the first line length, and the second line width is increased or decreased by the x times in comparison with the first line width. For example, in a same resolution, if the first line width is 200 pixels, and the second line length is 400 pixels, the second line width is doubled in comparison with the first line width.

Optionally, because the figure in the second image is theoretically not zoomed in or out unlimitedly relative to the figure in the first image, there is a threshold for the foregoing increase proportion, that is, the second line length is increased by the x times in comparison with the first line length. When x is greater than the threshold, the second line length is displayed as being increased by only threshold times. There is a threshold for the foregoing decrease proportion, that is, the second line length is decreased by the x times in comparison with the first line length. When x is less than the threshold, the second line length is displayed as being decreased by only threshold times. In this way, the second virtual figure presented by the electronic device is not excessively large or excessively small, and the user may have good visual experience.

For example, because the first line length may include L1, L2, L3, L4, and L5, and the second line length may include l1, l2, l3, l4, and l5, the electronic device separately calculates a proportion of the first line length and a proportion of the second line length, so that the error of the finally obtained second line width is smaller. For example, first, the electronic device may obtain differences between the lengths of the parts in the second line length and the lengths of the corresponding parts in the first line length. To be specific, difference d1 = left arm length l1 - left arm length L1, difference d2 = left arm length l2 - left arm length L2, difference d3 = left arm length l3 - left arm length L3, difference d4 = left arm length l4 - left arm length L4, and difference d5 = left arm length l5 - left arm length L5. Then, the electronic device sorts the difference d1, the difference d2, the difference d3, the difference d4, and the difference d5 in ascending order. It is assumed herein that the sorting order is [d5, d3, d4, d1, d2]. The electronic device may calculate a minimum change rate Scale(min) of the five change rates, that is, Scale(min)=l5/L5. The electronic device calculates the minimum change rate, to avoid a phenomenon, described in S402, that the error occurs in subsequent calculation of the second line width when the limb movement of the user changes but the distance of the user relative to the electronic device does not change. Optionally, the electronic device may further calculate an average value Scale(average) of first n minimum change rates of the foregoing five change rates, where a value of n may be any one of 1, 2, 3, 4, and 5. For example, when n is 3, Scale(average) = (l5/L5 + l3/L3 + l4/L4)/3. In this way, accuracy of the second width obtained by the electronic device can be increased. Finally, the electronic device may multiply the first line width by the minimum change rate or the average change rate to obtain the second line width. In other words, the second line width may be a product of the first line width multiplied by the Scale(min), or the second line width may be a product of the first line width multiplied by the Scale(average). It may be understood that the second line width may also specifically include a left arm width, a right arm width, a left leg width, a right leg width, and a torso width. Details are not described herein again.

In some implementations, the electronic device may display a second virtual figure with the second line length and the second line width. For example, when the user and the electronic device are in the scenario shown in FIG. 4B, that is, when the user moves away from the electronic device, the electronic device may obtain the second line length and the second line width by using the foregoing method, and display the second virtual figure shown in FIG. 5B. As shown in FIG. 5B, the second line width is obtained based on a degree of change between the first line length and the second line length, the second line length is shorter than the first line length, and the second line width is narrower than the first line width. In this way, a proportion of the line length to the line width of the second virtual figure shown in FIG. 5B can be balanced, and a phenomenon that the second virtual figure shown in FIG. 5B is observed as excessively wide and fat from the perspective of the user does not occur, so that the visual perception of the user is good.

For another example, when the user and the electronic device are in the scenario shown in FIG. 4C, that is, when the user moves towards the electronic device, the electronic device may obtain the second line length and the second line width by using the foregoing method, and display the virtual figure shown in FIG. 5C. As shown in FIG. 5C, the second line width is obtained based on a degree of change between the first line length and the second line length, the second line length is longer than the first line length, and the second line width is wider than the first line width. In this way, a proportion of the line length to the line width of the second virtual figure shown in FIG. 5C can be balanced, and a phenomenon that the second virtual figure shown in FIG. 5C is observed as excessively slender from the perspective of the user does not occur, so that the visual perception of the user is good.

In this way, the size of the virtual figure may reflect a distance between the user and the camera in a real environment, and the size of the virtual figure may be reflected by the lengths and the widths of the body parts. If the lengths of the parts of the virtual figure become longer, the widths of the parts of the virtual figure also become wider. If the lengths of the parts of the virtual figure become shorter, the widths of the parts of the virtual figure also become narrower. The user can sense a location change and a posture change of the user by observing the virtual figure, and the virtual figure observed by the user does not deform.

Mode 2: The electronic device displays the second virtual figure in a fixed size.

In some implementations, that the electronic device displays the second virtual figure in the fixed size may be understood as that a size of the second virtual figure is consistent with a size of the first virtual figure. That the size of the second virtual figure is consistent with the size of the first virtual figure may mean that the line length and the line width the second virtual figure are consistent with the line length and the line width the first virtual figure. That the sizes of the virtual figures are consistent means that the sizes of the first virtual figure and the second virtual figure displayed by the electronic device are consistent when a limb of the user is not bent or folded during workout. If the limb of the user is not bent or folded when the user is at a first location, and the limb of the user is bent or folded when the user is at a second location, the line width of the first virtual figure displayed by the electronic device is consistent with the line width of the second virtual figure, but the line length of the first virtual figure may be inconsistent with the line length of the second virtual figure.

In some implementations, the fixed size presented for the first virtual figure and the second virtual figure may be referred to as a first size.

Similarly, in mode 2, the size of the displayed second virtual figure needs to be consistent with the size of the first virtual figure. Therefore, a multiple of increasing or decreasing the second line length relative to the first line length needs to be calculated. In this way, coordinates of the second virtual figure can be decreased or increased by the same multiple as the coordinates of the skeletal nodes of the figure in the second image, so that the size of the first virtual figure is consistent with the size of the second virtual figure. In other words, the second line length is increased or decreased by x times relative to the first line length, and the coordinates of the second virtual figure are decreased or increased by the same x times relative to the coordinates of the skeletal nodes when the user is at the second location. For calculating the multiple of increasing or decreasing the second line length relative to the first line length, refer to the detailed descriptions in the method 1 in S905. Details are not described herein again.

In some implementations, to enable the second virtual figure to be in the same size as the first virtual figure, the electronic device may first change the coordinates of the skeletal nodes of the figure in the second image based on the foregoing change proportion of the line lengths, and then change changed coordinates of the skeletal nodes based on the foregoing change rate of the coordinates to obtain the second virtual figure. In this way, the second virtual figure is in the same size as the first virtual figure. For example, the electronic device may calculate the coordinates of the second virtual figure according to $P_{show2} = Scale_{calibration} * P_{calibration2} / Scale(average)$. $P_{show2}$ may represent the coordinates of the second virtual figure, $Scale_{calibration}$ may represent a change rate of the coordinates of the skeletal nodes of the virtual figure relative to the coordinates of the skeletal nodes of the image obtained by the electronic device, $P_{calibration2}$ may represent the coordinates of the skeletal nodes of the figure in the second image, and $Scale(average)$ may represent that the second line length is multiple times the first line length.

It is assumed that a value of $Scale_{calibration}$ is 1, and a value of $Scale(average)$ is 0.5, that is, the second line length is half of the first line length. In this case, the electronic device needs to double the coordinates of the skeletal nodes of the figure in the second image, and then perform change processing on the coordinates of the skeletal nodes obtained by the electronic device based on the image shot by the camera and the coordinates for displaying the virtual figure. Therefore, because the value of $Scale_{calibration}$ is 1, that is, the coordinates of the skeletal nodes obtained by the electronic device based on the image shot by the camera are the coordinates for displaying the virtual figure, $P_{show2}=P_{calibration2}/0.5$. It should be noted that the second virtual figure that is not moved along the y-axis is an unfixed second virtual figure.

Further, the electronic device may further fixedly display the second virtual figure on the virtual ground. In other words, a y-axis coordinate of a foot part of the fixed second virtual figure is consistent with a y-axis coordinate of the virtual ground. The electronic device may first obtain, based on the y-axis coordinate $y_{group}$ of the virtual ground and a y-axis coordinate $P_{show2}$ (foot) [y] of a foot part of the obtained unfixed second virtual figure, a distance $y_{gap2}$ between the foot part of the obtained unfixed second virtual figure and the virtual ground. In other words, the electronic device may obtain, based on the unfixed second virtual figure, a distance that the fixed second virtual figure needs to be moved along the y-axis shown in FIG. 6A. $P_{show2}$ includes $P_{show2}$ (foot) [y]. For example, the electronic device may calculate, according to $y_{gap2} = P_{show2}$ (foot) [y] - $y_{group}$, a distance that the unfixed second virtual figure needs to be moved along the y-axis if the second virtual figure needs to be fixedly displayed on the virtual ground. Then, the electronic device may further obtain coordinates $P'_{show2}$ of skeletal nodes of the fixed second virtual figure based on $y_{gap2}$ and the coordinates $P_{show2}$ of the skeletal nodes of the unfixed second virtual figure. For example, the electronic device may obtain y-axis coordinates of the skeletal nodes of the fixed second virtual figure according to

$$P'_{show2[y]} = P_{show2[y]} - y_{gap2}.$$

$P'_{show2[y]}$ represents the y-axis coordinates of the skeletal nodes of the fixed second virtual figure, and $P_{show2[y]}$ represents y-axis coordinates of the skeletal nodes of the unfixed second virtual figure. It may be understood that, because only values of the y-axis coordinates change in the coordinates of the fixed second virtual figure obtained based on the coordinates of the unfixed second virtual figure, x-axis coordinates of the skeletal nodes of the unfixed second virtual figure are consistent with x-axis coordinates of the skeletal nodes of the fixed second virtual figure.

In some implementations, after obtaining the coordinates of the skeletal nodes of the fixed second virtual figure, the electronic device may display the second virtual figure. For example, when the user and the electronic device are in the scenario shown in FIG. 4B, that is, when the user moves away from the electronic device, the electronic device may obtain the coordinates of the skeletal nodes of the second virtual figure by using the foregoing method, and display the second virtual figure shown in FIG. 6B. As shown in FIG. 6B, a distance between the foot part of the first virtual figure shown in FIG. 6A displayed by the electronic device and the bottom of the display range is consistent with a distance between the foot part of the second virtual figure shown in FIG. 6B displayed by the electronic device and the bottom of the display range. The size of the first virtual figure shown in FIG. 6A is also consistent with the size of the second virtual figure shown in FIG. 6B. The second virtual figure shown in FIG. 5B is smaller than the second virtual figure shown in FIG. 6B. For another example, when the user and the electronic device are in the scenario shown in FIG. 4C, that is, when the user moves away from the electronic device, the electronic device may obtain the coordinates of the skeletal nodes of the second virtual figure by using the foregoing method, and display the second virtual figure shown in FIG. 6C. As shown in FIG. 6C, a distance between the foot part of the first virtual figure shown in FIG. 6A displayed by the electronic device and the bottom of the display range is consistent with a distance between the foot part of the second virtual figure shown in FIG. 6C displayed by the electronic device and the bottom of the display range. The size of the first virtual figure shown in FIG. 6A is also consistent with the size of the second virtual figure shown in FIG. 6C. The second virtual figure shown in FIG. 5C is larger than the second virtual figure shown in FIG. 6C.

It can be learned from the foregoing method 2 that, when the user performs workout, the electronic device may display a virtual figure of a same size, and the user may observe the virtual figure of the appropriate size, so that the user can more clearly observe an action of the user during the workout. In addition, a phenomenon that a part (for example, the hand) that exceeds the display range and cannot be displayed when the virtual figure is zoomed in or zoomed out is avoided. In addition, a distance between a bottom of the displayed first virtual figure and the bottom of the display range is consistent with a distance between a bottom of the displayed second virtual figure and the bottom of the display range, so that blurred vision can be avoided when the user observes, and the user can observe more clearly.

Optionally, after the electronic device starts the first application, the electronic device may provide the foregoing two virtual figure display methods for the user to select. For example, the electronic device may display an "adaptive display" control and a "fixed display" control after starting the first application and before displaying the virtual figure. The electronic device may respond to an operation performed by the user on the "adaptive display" control, and use a first virtual figure display mode shown in the foregoing mode 1. The electronic device may respond to an operation performed by the user on the "fixed display" control, and use a second virtual figure display mode shown in the foregoing mode 2.

In addition to the virtual figure display method shown in FIG. 9, this embodiment of this application further provides some supplementary implementations. Specifically, when the electronic device detects that the obtained skeletal node information is incomplete, the electronic device may display a complete virtual figure through mirror symmetry or by reusing skeletal nodes obtained before a current moment. In this way, the electronic device can avoid a phenomenon that the virtual figure is not completely displayed, and user observation effect is good.

The following specifically describes how to display the virtual figure when the skeletal nodes of the figure in the image obtained by the electronic device are incomplete.

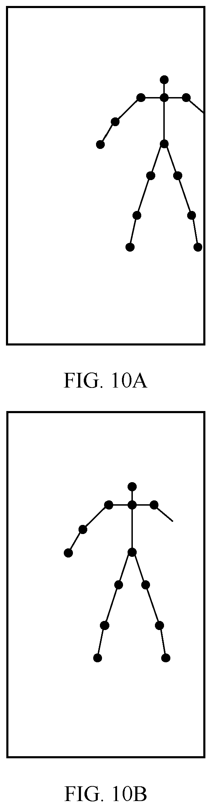

FIG. 10A is an example of a diagram of incomplete skeletal node information. In a possible implementation, the camera of the electronic device fails to capture a complete limb part of the user. As a result, the skeletal node information of the figure in the image obtained by the electronic device is incomplete. As shown in FIG. 10A, a rectangular display region shown in FIG. 10A may be the display region set by the first application in the electronic device. A figure in an image is attached to an edge of the display range, the figure is not completely displayed, and a right arm is missing from the figure displayed in the image. In another possible implementation, the camera of the electronic device captures a complete limb part of the user. However, when generating an image whose size is the same as the display range, the electronic device crops content shot by the camera, and some limb parts may be cropped. In this way, the skeletal node information of the figure in the image obtained by the electronic device is also shown in FIG. 10A. In this embodiment of this application, skeletal nodes obtained by the electronic device shown in FIG. 10A are not limited to the foregoing application scenario, and another application scenario may be further included. This is not limited herein.

In some implementations, when detecting that the skeletal nodes of the figure in the obtained image are shown in FIG. 10A, the electronic device may display the virtual figure shown in FIG. 7A. As shown in FIG. 7A, some parts (for example, the right arm) of the virtual figure are not displayed in FIG. 7A, and skeletal nodes of the some parts are skeletal nodes that are missing from the skeletal nodes shown in FIG. 10A relative to complete skeletal nodes. Optionally, the electronic device may prompt the user to adjust the location, so that the electronic device can display the complete virtual figure. For example, the electronic device may display the prompt box shown in FIG. 7A to prompt the user that the user may adjust the location. This is not limited to text information "Attention! Stand too far to the right. Please move to the left!". There may also be another manner (for example, a speech message or a vibration message) to remind the user that the user may adjust the position of the user.

In addition to the incomplete skeletal node information shown in FIG. 10A, the electronic device may further obtain another type of incomplete skeletal node information. FIG. 10B is an example of a diagram of incomplete skeletal node information. In a possible implementation, some limbs of the figure in the image obtained by the electronic device are blocked by another object. As a result, the skeletal node information obtained by the electronic device is shown in FIG. 10B. In this embodiment of this application, skeletal nodes obtained by the electronic device shown in FIG. 10B are not limited to the foregoing application scenario, and another application scenario may be further included. This is not limited herein.

In some implementations, when detecting that the obtained skeletal nodes are shown in FIG. 10B, the electronic device may display the virtual figure shown in FIG. 7B. As shown in FIG. 7B, some parts (for example, the right arm) of the virtual figure are not displayed in FIG. 7B, and skeletal nodes of the some parts are skeletal nodes that are missing from the skeletal nodes shown in FIG. 10B relative to complete skeletal nodes. Similarly, the electronic device may prompt the user to adjust the location, so that the electronic device can display the complete virtual figure. For example, the electronic device may display the prompt box shown in FIG. 7B to prompt the user that the user may adjust the location. This is not limited to text information "Attention! Stand too far to the right. Please move to the left!". There may also be another manner (for example, a speech message or a vibration message) to remind the user that the user may adjust the position of the user.

In a possible implementation, the virtual figure shown in FIG. 7A is closely attached to the edge of the display range, but the virtual figure shown in FIG. 7B is not closely attached to the edge of the display range. The electronic device may display the complete virtual figure in the manner of mirror symmetry or the manner of reusing the skeletal nodes obtained before the current moment.

The mirror symmetry manner may mean that the electronic device may recognize a symmetric part of a missing part, and display the symmetric part through mirroring in a missing range of the virtual figure. For example, the right arm is missing from the virtual figure shown in FIG. 7B for display. The electronic device may recognize that a symmetric part of the right arm is the left arm, and the left arm of the virtual figure shown in FIG. 7B is completely displayed. The electronic device may mirror the displayed left arm, and display the mirrored left arm in a range of the missing right arm. The electronic device may display the supplemented virtual figure shown in FIG. 7C. A gray range shown in FIG. 7C is a range filled by the mirrored left arm of the virtual figure. In this embodiment of this application, the mirror symmetry manner is applicable to a case in which the limbs used for the workout of the user are symmetric as much as possible. This is not limited herein.

The manner of reusing the skeletal nodes obtained before the current moment may be that complete skeletal node information obtained by the electronic device before the current moment may be stored in the electronic device. The electronic device may find the complete skeletal node information obtained before the current moment, and supplement missing skeletal node information to the incomplete skeletal node information shown in FIG. 10B to generate the supplemented skeletal node information, to obtain the supplemented virtual figure shown in FIG. 7C. In this embodiment of this application, the manner of reusing the skeletal nodes obtained before the current moment is applicable to a case in which the workout of the user is as continuous as possible. This is not limited.

Optionally, when the electronic device runs a sports app, a video of a coach is displayed, and the user performs workout based on a limb change of the coach. The electronic device may further supplement a missing part of the displayed virtual figure based on a corresponding part of the coach. For example, the skeletal nodes obtained by the electronic device are shown in FIG. 10B. If the right arm is missing from the virtual figure, the electronic device may display, based on a displayed right arm of the coach, the missing right arm of the virtual figure. The electronic device may display the supplemented virtual figure shown in FIG. 7B. A gray range is consistent with the right arm of the coach.

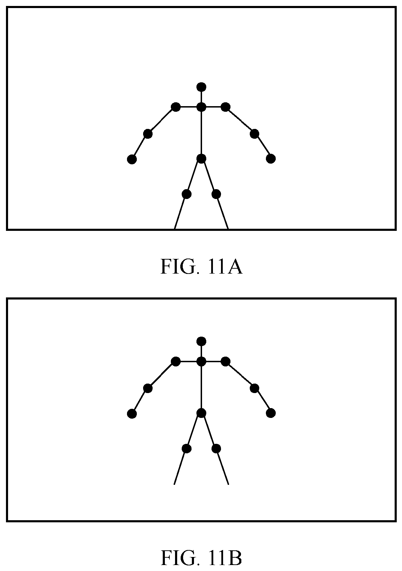

FIG. 11A shows an example of incomplete skeletal node information. FIG. 11A is similar to FIG. 10A. The example of the missing part of the virtual figure shown in FIG. 10A is a left and right part, and an example of a missing part of a virtual figure shown in FIG. 11A is an upper and lower part. For skeletal nodes shown in FIG. 11A obtained by the electronic device, refer to related descriptions in FIG. 10A. Details are not described herein again.

In some implementations, when detecting that the obtained skeletal nodes are shown in FIG. 11A, the electronic device may display the virtual figure shown in FIG. 8A. As shown in FIG. 8A, some parts (for example, left and right calves) of the virtual figure are not displayed in FIG. 8A, and skeletal nodes of the some parts are skeletal nodes that are missing from the skeletal nodes shown in FIG. 11A relative to complete skeletal nodes.

In addition to the incomplete skeletal node information shown in FIG. 11A, the electronic device may further obtain another type of skeletal node information. FIG. 11B shows an example of incomplete skeletal node information. FIG. 11B is similar to FIG. 10B. The example of the missing part of the virtual figure shown in FIG. 10B is a left and right part, and an example of a missing part of a virtual figure shown in FIG. 11B is an upper and lower part. For skeletal nodes shown in FIG. 11B obtained by the electronic device, refer to related descriptions in FIG. 10B. Details are not described herein again.

In some implementations, when detecting that the obtained skeletal nodes are shown in FIG. 11B, the electronic device may display the virtual figure shown in FIG. 8B. As shown in FIG. 8B, some parts (for example, left and right calves) of the virtual figure are not displayed in FIG. 8B, and skeletal nodes of the some parts are skeletal nodes that are missing from the skeletal nodes shown in FIG. 8B relative to complete skeletal nodes.

In a possible implementation, the virtual figure shown in FIG. 8A is closely attached to the edge of the display range, but the virtual figure shown in FIG. 8B is not closely attached to the edge of the display range. The electronic device may display the complete virtual figure in a manner of direct vertical extension or the manner of reusing the skeletal nodes obtained before the current moment.

The direct vertical extension manner may refer to that the electronic device directly supplements, based on a previously obtained height of the virtual figure, the missing part of the virtual figure. For example, the left and right calves are missing from the virtual figure shown in FIG. 8B. The electronic device obtains leg lengths of the virtual figure based on the previously obtained height of the virtual figure or a normal human body proportion. The electronic device may display the supplemented virtual figure shown in FIG. 8C. A gray range shown in FIG. 8C is a direct vertical extension range. In this embodiment of this application, the direct vertical extension manner is applicable to a case in which the user is in the standing state. This is not limited herein.

For the manner of reusing the skeletal nodes obtained before the current moment, refer to the foregoing related content for FIG. 8C. Details are not described herein again. Optionally, when the electronic device runs a sports app, a video of a coach is displayed, and the user performs workout based on a limb change of the coach. The electronic device may further supplement a missing part of the displayed virtual figure based on a corresponding part of the coach. Herein, refer to the foregoing related content for FIG. 8C. Details are not described herein again.

It can be learned from the foregoing method that the electronic device may supplement the missing part of the virtual figure in most cases, so that the user can observe the complete virtual figure, and user experience is good.

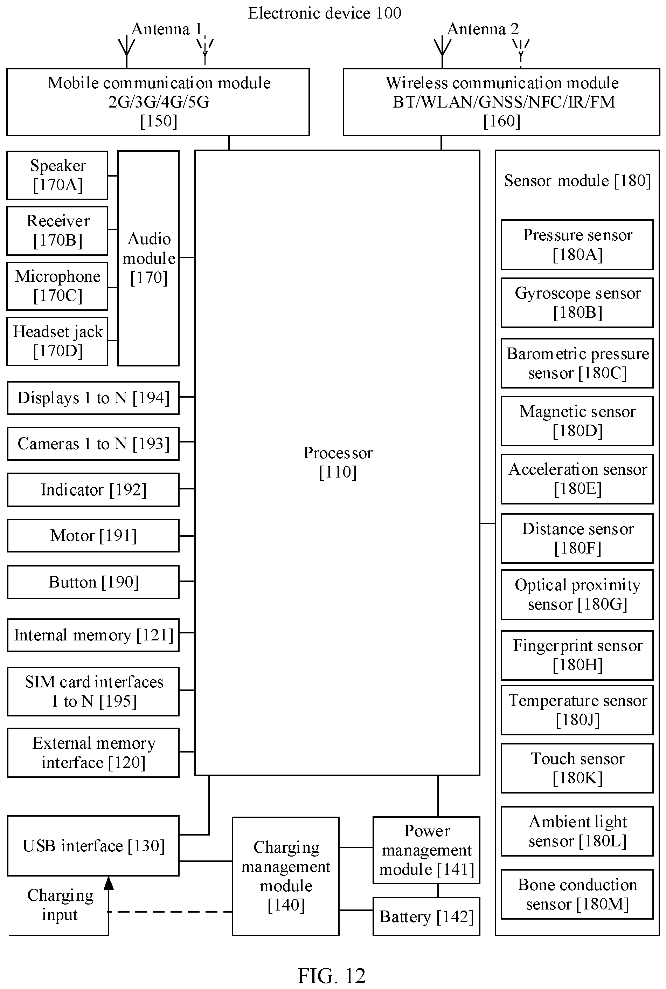

FIG. 12 is a diagram of a structure of an electronic device 100.

The electronic device 100 may be a portable terminal device carrying iOS®, Android®, Microsoft®, harmony®, or another operating system. The electronic device 100 may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle, a vehicle-mounted device, a smart home device, and/or a smart city device, which is not limited thereto. The electronic device 100 may further include a non-portable terminal device like a laptop (laptop) computer having a touch-sensitive surface or a touch panel, a desktop computer having a touch-sensitive surface or a touch panel, or the like. A specific type of the electronic device is not particularly limited in embodiments of this application.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, the camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The memory may be further disposed in the processor 110, to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access, reduces waiting time of the processor 110, and therefore, improves system efficiency.

In some implementations, the processor 110 may be configured to obtain a body feature based on image information collected by the camera 193. The body feature includes a posture of a figure in an image, skeletal node information of the figure, skin smoothness of the figure in the image, wearing of the figure in the image, and the like. The processor 110 may be further configured to obtain lengths of parts of the virtual figure or coordinate information of the virtual figure based on skeletal nodes. The processor 110 may be further configured to calculate a change proportion of a first line length to a second line length. The processor 110 may be further configured to adjust a size of the virtual figure based on a display range of the virtual figure.

The charging management module 140 is configured to receive a charging input from a charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input by using a wireless charging coil of the electronic device 100. The charging management module 140 may further supply power to the electronic device by using the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may be further multiplexed, to improve antenna utilization. For example, the antenna 1 may be multiplexed as a diversity antenna in a wireless local area network. In some other embodiments, an antenna may be used in combination with a tuning switch.

The mobile communication module 150 may provide a solution of wireless communication that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing like filtering or amplification on the received electromagnetic wave, and transmit the electromagnetic wave to the modem processor for demodulation. The mobile communication module 150 may further amplify a signal modulated by the modem processor, and convert the signal into an electromagnetic wave through the antenna 1 for radiation. In some embodiments, at least some function modules of the mobile communication module 150 may be disposed in the processor 110. In some embodiments, at least some function modules of the mobile communication module 150 and at least some modules of the processor 110 may be disposed in a same device.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (not limited to the speaker 170A, the receiver 170B, and the like), and displays an image or a video by using the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components that integrate at least one communication processor module. The wireless communication module 160 receives an electromagnetic wave through the antenna 2, performs demodulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time division-synchronous code division multiple access (time division-synchronous code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The electronic device 100 implements a display function by using the GPU, the display 194, the application processor, and the like. The GPU is a microprocessor for image processing, and is connected to the display 194 and the application processor. The GPU is configured to: perform mathematical and geometric calculation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

In some implementations, the display may be configured to display a first virtual figure corresponding to a figure in a first image and a second virtual figure corresponding to a figure in a second image.

The electronic device 100 may implement a shooting function by using the ISP, the camera 193, the video codec, the GPU, the display 194, the application processor, and the like.

The ISP is configured to process data fed back by the camera 193. For example, during shooting, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, and brightness of the image. The ISP may further optimize parameters such as exposure and a color temperature of a shooting scenario. In some embodiments, the ISP may be disposed in the camera 193.

The camera 193 is configured to capture a static image or a video. An optical image of an object is generated through the lens, and is projected to the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the electronic device 100 may include one or N cameras 193, where N is a positive integer greater than 1.

In some implementations, the camera 193 may be configured to capture an image after the electronic device runs a first application and receives a first operation.

The digital signal processor is configured to process a digital signal, and may process another digital signal in addition to a digital image signal. For example, when the electronic device 100 selects a frequency, the digital signal processor is configured to perform Fourier transform and the like on frequency energy.

The video codec is configured to compress or decompress a digital video. The electronic device 100 may support one or more video codecs. Therefore, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a transmission mode between human brain neurons, and may further continuously perform self-learning. Applications such as intelligent cognition of the electronic device 100 may be implemented by using the NPU, for example, image recognition, facial recognition, speech recognition, and text understanding.

The internal memory 121 may include one or more random access memories (random access memory, RAM) and one or more non-volatile memories (non-volatile memory, NVM).

The random access memory may include a static random access memory (static random access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, like a 5th generation DDR SDRAM generally referred to as DDR5 SDRAM), or the like. The non-volatile memory may include a magnetic disk storage device and a flash memory (flash memory).

According to an operating principle, the flash memory may be classified into NOR FLASH, NAND FLASH, 3D NAND FLASH, and the like; according to potential orders of storage cells, the flash memory may be classified into a single-level cell (single-level cell, SLC), a multi-level cell (multi-level cell, MLC), a triple-level cell (triple-level cell, TLC), a quad-level cell (quad-level cell, QLC), and the like; and according to storage specifications, the flash memory may be classified into a universal flash storage (English: universal flash storage, UFS), an embedded multimedia card (embedded multimedia Card, eMMC), and the like.

The random access memory may be directly read and written by the processor 110. The random access memory may be configured to store an executable program (for example, machine instructions) in an operating system or another running program, and may be further configured to store data of a user, data of an application, and the like.

The non-volatile memory may also store the executable programs, the data of the user, and the data of the application, and the like, and may be loaded into the random access memory in advance, to be directly read and written by the processor 110.

The external memory interface 120 may be configured to connect to an external non-volatile memory, to expand a storage capability of the electronic device 100. The external non-volatile memory communicates with the processor 110 through the external memory interface 120, to implement a data storage function. For example, a file like music or a video is stored in the external non-volatile memory.

The electronic device 100 may implement an audio function, for example, music playing and recording, by using the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode by using the speaker 170A.

The receiver 170B, also referred to as an "earpiece", is configured to convert an audio electrical signal into a sound signal. When a call is answered or speech information is received by using the electronic device 100, the receiver 170B may be put close to a human ear to listen to a voice.

The microphone 170C, also referred to as "mike" or "mic", is configured to convert a sound signal into an electrical signal.

The headset jack 170D is configured to connect to a wired headset. The headset jack 170D may be the USB interface 130, or may be a 3.5 mm open mobile terminal platform (open mobile terminal platform, OMTP) standard interface, or a cellular telecommunications industry association of the USA (cellular telecommunications industry association of the USA, CTIA) standard interface.

The pressure sensor 180A is configured to sense a pressure signal, and can convert the pressure signal into an electrical signal.

The gyroscope sensor 180B may be configured to determine a motion posture of the electronic device 100. In some embodiments, an angular velocity of the electronic device 100 around three axes (that is, axes x, y, and z) may be determined by using the gyroscope sensor 180B. The gyroscope sensor 180B may be configured to implement image stabilization during shooting. For example, when the shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may be further used in a navigation scenario and a motion sensing game scenario.

The barometric pressure sensor 180C is configured to measure barometric pressure. In some embodiments, the electronic device 100 calculates an altitude by using a barometric pressure value measured by the barometric pressure sensor 180C, to assist in positioning and navigation.

The magnetic sensor 180D includes a Hall sensor. The electronic device 100 may detect opening and closing of a flip leather cover by using the magnetic sensor 180D. In some embodiments, when the electronic device 100 is a clamshell phone, the electronic device 100 may detect opening and closing of a flip cover by using the magnetic sensor 180D. Further, a feature like automatic unlocking of the flip cover is set based on a detected opening or closing state of the leather cover or a detected opening or closing state of the flip cover.

The acceleration sensor 180E may detect accelerations in various directions (usually on the three axes) of the electronic device 100. When the electronic device 100 is still, a magnitude and a direction of gravity may be detected. The acceleration sensor 180E may be further configured to recognize a posture of the electronic device, and is applied to an application like switching between a landscape mode and a portrait mode or a pedometer.

The distance sensor 180F is configured to measure a distance. The electronic device 100 may measure the distance in an infrared manner or a laser manner. In some embodiments, in a shooting scenario, the electronic device 100 may measure a distance by using the distance sensor 180F to implement quick focusing.

In some implementations, the distance sensor 180F may be a depth sensor, and may be configured to detect whether a location of the user changes. For example, the distance sensor 180F may detect that the user is located at a first location and a second location within a capturing range of the camera 193.

The optical proximity sensor 180G may include, for example, a light emitting diode (LED) and an optical detector, for example, a photodiode.

The ambient light sensor 180L is configured to sense ambient light brightness.

The fingerprint sensor 180H is configured to collect a fingerprint. The electronic device 100 may use a feature of the collected fingerprint to implement fingerprint-based unlocking, application lock access, fingerprint-based shooting, fingerprint-based call answering, and the like.

The temperature sensor 180J is configured to detect a temperature.

The touch sensor 180K is also referred to as a "touch component". The touch sensor 180K may be disposed on the display 194, and the touch sensor 180K and the display 194 form a "touchscreen". The touch sensor 180K is configured to detect a touch operation performed on or near the touch sensor. The touch sensor may transfer the detected touch operation to the application processor to determine a type of a touch event. A visual output related to the touch operation may be provided on the display 194. In some other embodiments, the touch sensor 180K may also be disposed on a surface of the electronic device 100 at a location different from that of the display 194.

The bone conduction sensor 180M may obtain a vibration signal.

The button 190 includes a power button, a volume button, and the like. The button 190 may be a mechanical button, or may be a touch button. The electronic device 100 may receive a button input, and generate a button signal input related to a user setting and function control of the electronic device 100.

The motor 191 may generate a vibration prompt.

The indicator 192 may be an indicator light, and may indicate a charging status and a power change, or may indicate a message, a missed call, a notification, and the like.

The SIM card interface 195 is configured to connect to a SIM card.

A software system of the electronic device 100 may use a layered architecture, an event-driven architecture, a microkemel architecture, a micro service architecture, or a cloud architecture. In this embodiment of the present invention, an Android system of a layered architecture is used as an example to illustrate a software structure of the electronic device 100.

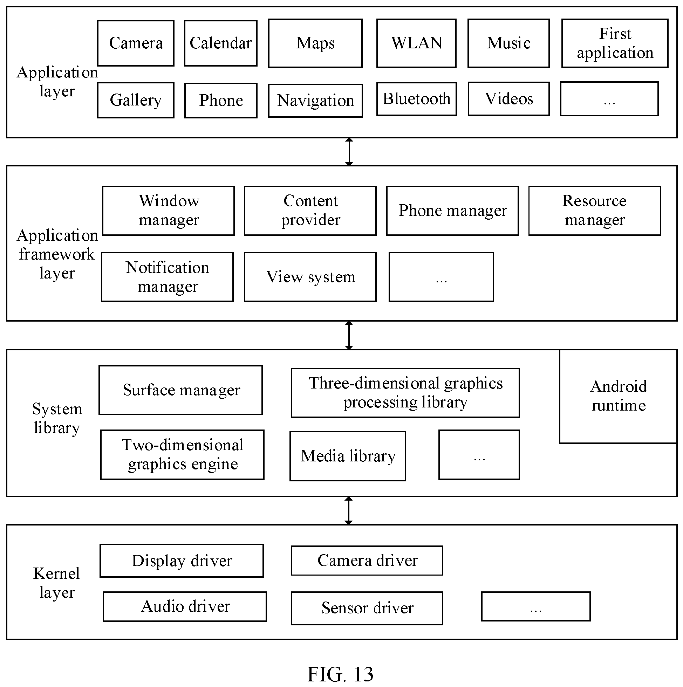

FIG. 13 is a block diagram of a software structure of the electronic device 100 according to an embodiment of the present invention.

In a layered architecture, software is divided into several layers, and each layer has a clear role and task. Layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 13, an application package may include applications such as First application, Camera, Gallery, Calendar, Phone, Maps, Navigation, WLAN, Bluetooth, Music, and Videos.

The first application may support the electronic device to capture an image; and may further support the electronic device to recognize a figure in the image, and display a virtual figure based on a body feature of the figure. The first application may further support the electronic device to analyze the body feature of the figure in the image.

The application framework layer provides an application programming interface (application programming interface, API) and a programming framework for an application at the application layer. The application framework layer includes some predefined functions.

As shown in FIG. 13, the application framework layer may include a window manager, a content provider, a view system, a phone manager, a resource manager, a notification manager, and the like.

The window manager is configured to manage a window program. The window manager may obtain a size of a display, determine whether there is a status bar, lock a screen, take a screenshot, and the like.

The content provider is configured to store and obtain data, and enable the data to be accessed by an application. The data may include a video, an image, audio, calls that are made and answered, a browsing history and bookmarks, an address book, and the like.

The view system includes visual controls such as a control for displaying text and a control for displaying a picture. The view system may be configured to construct an application. A display interface may include one or more views. For example, a display interface including an SMS notification icon may include a text display view and a picture display view.

The phone manager is configured to provide a communication function of the electronic device 100, for example, management of call statuses (including answering, declining, and the like).

The resource manager provides various resources such as a localized character string, an icon, a picture, a layout file, and a video file for an application.

The notification manager enables an application to display notification information in a status bar, and may be configured to convey a notification message. The notification manager may automatically disappear after a short pause without requiring a user interaction. For example, the notification manager is configured to notify download completion, provide a message notification, and the like. The notification manager may alternatively be a notification that appears in a top status bar of the system in a form of a graph or a scroll bar text, for example, a notification of an application running on the background or a notification that appears on a screen in a form of a dialog window. For example, text information is prompted in the status bar, a prompt tone is produced, an electronic device vibrates, or an indicator blinks.

The Android runtime includes a core library and a virtual machine. The Android runtime is responsible for scheduling and management of the Android system.

The core library includes two parts: a function that needs to be invoked by the Java language and a core library of Android.

The application layer and the application framework layer run on the virtual machine. The virtual machine executes Java files at the application layer and the application framework layer as binary files. The virtual machine is configured to implement functions such as object lifecycle management, stack management, thread management, security and abnormality management, and garbage collection.

The system library may include a plurality of function modules, for example, a surface manager (surface manager), a media library (media library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playing and recording of a plurality of commonly used audio and video formats, static image files, and the like. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes an example of a working process of software and hardware of the electronic device 100 with reference to a shooting scenario.

When the touch sensor 180K receives a touch operation, a corresponding hardware interruption is sent to the kernel layer. The kernel layer processes the touch operation into an original input event (including information such as touch coordinates and a timestamp of the touch operation). The original input event is stored at the kernel layer. The application framework layer obtains the original input event from the kernel layer, and identifies a control corresponding to the input event. An example in which the touch operation is a single-tap operation, and a control corresponding to the single-tap operation is a control of a camera application icon is used. A camera application invokes an interface of the application framework layer to start the camera application, then enables the camera driver by invoking the kernel layer, and captures a static image or a video by using the camera 193.

Implementations of this application may be randomly combined to achieve different technical effect.

All or some of foregoing embodiments may be implemented by using software, hardware, firmware, or any combination thereof. When the software is used to implement embodiments, all or a part of embodiments may be implemented in a form of a computer program product. The computer program product includes one or more computer instructions. When the computer program instructions are loaded and executed on the computer, the procedure or functions according to this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, and microwave, or the like) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

A person of ordinary skill in the art may understand that all or some of the processes of the methods in embodiments may be implemented by a computer program instructing relevant hardware. The program may be stored in a computer-readable storage medium. When the program runs, the processes of the methods in embodiments are performed. The foregoing storage medium includes any medium that can store program code, for example, a ROM, a random access memory RAM, a magnetic disk, or an optical disc.

In conclusion, the foregoing descriptions are merely embodiments of the technical solutions of the present invention, but are not intended to limit the protection scope of the present invention. Any modification, equivalent replacement, improvement, or the like made according to the disclosure of the present invention shall fall within the protection scope of the present invention.

**Claims**

1. A virtual figure display method, wherein the method is applied to an electronic device and comprises:

   when a user is at a distance of a first value from the electronic device, capturing a first image by using a camera, and displaying a first virtual figure; and
   when the user is at a distance of a second value from the electronic device, capturing a second image by using the camera, and displaying a second virtual figure, wherein
   the second value is less than the first value, a length of a body part of the second virtual figure is greater than a length of a body part of the first virtual figure, and a width of the body part of the second virtual figure is greater than a width of the body part of the first virtual figure.

2. The method according to claim 1, wherein

   the length of the body part of the first virtual figure and a length of a body part of a figure in the first image are in proportion;
   the length of the body part of the second virtual figure and a length of a body part of a figure in the second image are in proportion; and
   a posture of the first virtual figure is the same as a posture of the figure in the first image, and a posture of the second virtual figure is the same as a posture of the figure in the second image.

3. The method according to claim 1 or 2, wherein the method further comprises:

   displaying, by the electronic device, a first user interface, wherein the first user interface comprises a first region, and the first region is used to display the first virtual figure and the second virtual figure, wherein
   when an area of the first region is a first area, the length of the body part of the first virtual figure and the length of the body part of the figure in the first image are in a first proportion, and the length of the body part of the second virtual figure and the length of the body part of the figure in the second image are in the first proportion; and
when the area of the first region is a second area, the length of the body part of the first virtual figure and the length of the body part of the figure in the first image are in a second proportion, and the length of the body part of the second virtual figure and the length of the body part of the figure in the second image are in the second proportion, wherein
the first area is less than the second area, and the first proportion is less than the second proportion.

4. A virtual figure display method, wherein the method is applied to an electronic device and comprises:

   when a user is at a distance of a first value from the electronic device, capturing a first image by using a camera, and displaying a first virtual figure; and
   when the user is at a distance of a second value from the electronic device, capturing a second image by using the camera, and displaying a second virtual figure, wherein
   the second value is less than the first value, and widths of body parts and sizes of the first virtual figure and the second virtual figure are the same.

5. The method according to claim 4, wherein

   a length of the body part of the first virtual figure and a length of a body part of a figure in the first image are in proportion;
   a length of the body part of the second virtual figure and a length of a body part of a figure in the second image are in proportion; and
   a posture of the first virtual figure is the same as a posture of the figure in the first image, and a posture of the second virtual figure is the same as a posture of the figure in the second image.

6. The method according to claim 4 or 5, wherein the sizes of both the first virtual figure and the second virtual figure are a preset first size.

7. The method according to claim 6, wherein the method further comprises:

   displaying, by the electronic device, a first user interface, wherein the first user interface comprises a first region, and the first region is used to display the first virtual figure and the second virtual figure, wherein
   a foot part of the first virtual figure is located at a first location in the first region, and a foot part of the second virtual figure is located at a second location in the first region; and

a distance between the first location and a bottom of the first region is the same as a distance between the second location and the bottom of the first region.

8. The method according to any one of claims 1 to 7, wherein the first image is a first frame of image that is captured after the camera is started and that comprises a figure;

the width of the body part of the first virtual figure and a width of the body part of the figure in the first image are in proportion, or the width of the body part of the first virtual figure is obtained based on the length of the body part of the figure in the first image and a preset human body proportion; and
the width of the body part of the second virtual figure is obtained based on the width of the body part of the first virtual figure and a ratio of the length of the body part of the figure in the second image to the length of the body part of the figure in the first image.

9. The method according to any one of claims 1 to 8, wherein

before displaying the first virtual figure, the method further comprises: recognizing skeletal nodes of the figure in the first image, and determining the posture of the figure and the length of the body part of the figure in the first image based on the recognized skeletal nodes; and
before displaying the second virtual figure, the method further comprises: recognizing skeletal nodes of the figure in the second image, and determining the posture of the figure and the length of the body part of the figure in the second image based on the recognized skeletal nodes.

10. The method according to any one of claims 1 to 9, wherein the first image is a first frame that is captured after the camera is started and that comprises a complete figure.

11. The method according to any one of claims 1 to 10, wherein before capturing the first image, the method further comprises:
displaying first prompt information, wherein the first prompt information is used to prompt the user to change a location, to enable the camera to capture an image comprising the complete figure.

12. The method according to claim 11, wherein the method further comprises:
displaying second prompt information, wherein the second prompt information is used to prompt the user to adjust to a standard posture, and the standard posture is a posture in which body parts of the user do not block each other.

13. The method according to any one of claims 1 to 12, wherein
the second image comprises only a first partial body of the figure, and the second virtual figure comprises the first partial body and a second partial body.

14. The method according to claim 13, wherein

the second partial body is obtained by the electronic device according to a principle of left-right symmetry of a figure; or
is obtained by the electronic device by vertically extending the first partial body; or
is obtained by the electronic device based on a figure in an image captured before the second image.

15. The method according to any one of claims 1 to 14, wherein the method further comprises:

displaying, by the electronic device, the first user interface, wherein the first user interface comprises the first region, and the first region is used to display the first virtual figure and the second virtual figure, wherein
the first user interface further displays a follow-along video.

16. The method according to any one of claims 1 to 15, wherein before capturing the first image, the method further comprises:

running a first application, wherein the first application is a sports application or a game application; and
receiving, by the electronic device, a first operation, wherein the first operation is used to start the camera.

17. The method according to any one of claims 1 to 9, wherein any one or more of the following attributes of the first virtual figure are the same as attributes of the figure in the first image: a hairstyle, an accessory, clothing, a facial expression, or skin smoothness.

18. The method according to claim 17, wherein any one or more of the following attributes of the first virtual figure and the second virtual figure are preset by the electronic device or set by the user: hairstyles, accessories, clothing, facial expressions, or skin smoothness.

19. The method according to any one of claims 16 to 18, wherein the any one or more of the following attributes of the first virtual figure and the second virtual figure are provided by the first application in the electronic device: the hairstyles, the accessories, the clothing, the facial expressions, or the skin smoothness.

20. The method according to any one of claims 1 to 19, wherein the method further comprises:
displaying, by the electronic device, the first user interface, wherein the first user interface is used to display the first virtual figure and the second virtual figure, and content displayed on the first user interface does not comprise the first image and the second image.

21. An electronic device, wherein the electronic device comprises a memory and one or more processors, the memory is configured to store a computer program, and the processor is configured to invoke the computer program, to enable the electronic device to perform the method according to any one of claims 1 to 20.

22. A computer-readable storage medium, comprising instructions, wherein when the instructions are run on an electronic device, the electronic device is enabled to perform the method according to any one of claims 1 to 20.

FIG. 1

FIG. 2

FIG. 3A

FIG. 3B

FIG. 3C

24" Lift the knee and tighten the abdomen

No. 1 16 points

FIG. 3D

FIG. 4A

FIG. 4B

FIG. 4C

FIG. 5A

FIG. 5B

521

520

The closer the user
is to the camera,
the larger the
virtual figure is

24" Lift the knee and
tighten the abdomen

No. 1 16 points

FIG. 5C

Y axis

601

600

24" Lift the knee and
tighten the abdomen

No. 1 16 points

X axis

FIG. 6A

611

610

The size of the
virtual figure
remains unchanged

24" Lift the knee and
tighten the abdomen

No. 1 16 points

FIG. 6B

621

620

The size of the
virtual figure
remains unchanged

24" Lift the knee and
tighten the abdomen

No. 1 16 points

FIG. 6C

701

702

700

Attention! Stand too far to the right.
Please move to the left!

24" Lift the knee and
tighten the abdomen

No. 1 16 points

FIG. 7A

711

712

710

Attention! Stand too far to the right.
Please move to the left!

24" Lift the knee and
tighten the abdomen

No. 1 16 points

FIG. 7B

FIG. 7C

FIG. 8A

FIG. 8B

FIG. 8C

S901: An electronic device runs
a first application

↓

S902: The electronic device
receives a first operation

↓

S903: The electronic device starts a camera, and
captures an image by using the camera

↓

S904: The electronic device obtains a first image
captured by the camera

↓

S905: The electronic device recognizes a first body feature of a figure in
the captured first image

↓

S906: The electronic device displays a first virtual figure based on
the recognized first body feature

↓

S907: The electronic device captures a second image, and
obtains a second body feature

↓

S908: The electronic device displays a second virtual figure
based on the second body feature

FIG. 9

FIG. 10A

FIG. 10B

FIG. 11A

FIG. 11B

EP 4 621 741 A1

Electronic device 100

Antenna 1    Antenna 2

Mobile communication module
2G/3G/4G/5G
[150]

Wireless communication module
BT/WLAN/GNSS/NFC/IR/FM
[160]

Speaker
[170A]

Receiver
[170B]

Audio
module
[170]

Microphone
[170C]

Headset jack
[170D]

Displays 1 to N [194]

Cameras 1 to N [193]

Indicator [192]

Motor [191]

Button [190]

Internal memory [121]

SIM card interfaces
1 to N [195]

External memory
interface [120]

Processor
[110]

Sensor module [180]

Pressure sensor
[180A]

Gyroscope sensor
[180B]

Barometric pressure
sensor [180C]

Magnetic sensor
[180D]

Acceleration sensor
[180E]

Distance sensor
[180F]

Optical proximity
sensor [180G]

Fingerprint sensor
[180H]

Temperature sensor
[180J]

Touch sensor
[180K]

Ambient light
sensor [180L]

Bone conduction
sensor [180M]

USB interface [130]

Charging
input

Charging
management
module
[140]

Power
management
module [141]

Battery [142]

FIG. 12

47

| | | | | | | First |
|---|---|---|---|---|---|---|

Application layer

| Camera | Calendar | Maps | WLAN | Music | First application |
|---|---|---|---|---|---|
| Gallery | Phone | Navigation | Bluetooth | Videos | ... |

Application framework layer

| Window manager | Content provider | Phone manager | Resource manager |
|---|---|---|---|
| Notification manager | View system | ... | |

System library

| Surface manager | Three-dimensional graphics processing library | Android runtime |
|---|---|---|
| Two-dimensional graphics engine | Media library | ... |

Kernel layer

| Display driver | Camera driver | |
|---|---|---|
| Audio driver | Sensor driver | ... |

FIG. 13

## INTERNATIONAL SEARCH REPORT

| | International application No. |
| --- | --- |
| | **PCT/CN2023/135718** |

**A. CLASSIFICATION OF SUBJECT MATTER**

G06V40/20(2022.01)i; A63F13/00(2014.01)i

According to International Patent Classification (IPC) or to both national classification and IPC

**B. FIELDS SEARCHED**

Minimum documentation searched (classification system followed by classification symbols)

IPC:G06V40/-; A63F13/-

Documentation searched other than minimum documentation to the extent that such documents are included in the fields searched

Electronic data base consulted during the international search (name of data base and, where practicable, search terms used)

CNTXT; CNABS; CJFD; ENTXTC; ENTXT; VEN; IEEE; CNKI: 跟练, 健身, 虚拟, 人物, 形象, 尺寸, 大小, 固定, 距离, 拍摄, 摄像, 摄像头, 相机, 透视, 显示, fitness, follow-up, virtual, size, fixed, distance, shoot, camera, perspective, display.

**C. DOCUMENTS CONSIDERED TO BE RELEVANT**

| Category* | Citation of document, with indication, where appropriate, of the relevant passages | Relevant to claim No. |
| --- | --- | --- |
| X | CN 101785927 A (YOU TUMING) 28 July 2010 (2010-07-28) description, paragraphs 6-25 | 4-22 |
| Y | CN 101785927 A (YOU TUMING) 28 July 2010 (2010-07-28) description, paragraphs 6-25 | 1-3 |
| Y | TW 201121614 A (JIAN HUIJUAN) 01 July 2011 (2011-07-01) page 13, paragraph 2-page 14, paragraph 1 | 1-3 |
| A | CN 110490978 A (ZHEJIANG UNIVERSITY OF TECHNOLOGY) 22 November 2019 (2019-11-22) entire document | 1-22 |
| A | CN 111617464 A (XI'AN TECHNOLOGICAL UNIVERSITY) 04 September 2020 (2020-09-04) entire document | 1-22 |
| A | US 2018321817 A1 (COLOPL, INC.) 08 November 2018 (2018-11-08) entire document | 1-22 |

☐ Further documents are listed in the continuation of Box C.   ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **06 February 2024** | **27 February 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

EP 4 621 741 A1

## INTERNATIONAL SEARCH REPORT
### Information on patent family members

International application No.

**PCT/CN2023/135718**

| Patent document cited in search report | | | Publication date (day/month/year) | Patent family member(s) | | | Publication date (day/month/year) |
|---|---|---|---|---|---|---|---|
| CN | 101785927 | A | 28 July 2010 | None | | | |
| TW | 201121614 | A | 01 July 2011 | TWI | 395600 | B | 11 May 2013 |
| CN | 110490978 | A | 22 November 2019 | CN | 110490978 | B | 21 July 2023 |
| CN | 111617464 | A | 04 September 2020 | CN | 111617464 | B | 24 February 2023 |
| US | 2018321817 | A1 | 08 November 2018 | JP | 2018190163 | A | 29 November 2018 |
| | | | | JP | 6509938 | B2 | 08 May 2019 |
| | | | | JP | 2019155113 | A | 19 September 2019 |

Form PCT/ISA/210 (patent family annex) (July 2022)

**REFERENCES CITED IN THE DESCRIPTION**

**Patent documents cited in the description**

- CN 202211620536